# EUROPEAN PATENT APPLICATION

(11) **EP 1 895 363 A2**
(43) Date of publication of application: **05.03.2008**
(21) Application number: 07016827.3
(22) Date of filing: 28.08.2007
(51) Int. Cl.: G03B 21/20, G03B 27/54, F21V 33/00, G02B 27/28, G02F 1/13, H04N 9/31, H05B 37/02

(54) **Illumination apparatus and image projector using the same**

(30) Priority: 30.08.2006 JP 2006234203; 21.12.2006 JP 2006343979
(71) Applicant: Olympus Corporation, Tokyo 151-0072 (JP)
(72) Inventor: Hanano, Kazunari, Hachioji-shi Tokyo 192-0032 (JP)
(74) Representative: von Hellfeld, Axel

(57) **Abstract**

An illumination apparatus (100) is provided, the illumination apparatus including at least two light-emitting diodes (LEDs 1,2) capable of being driven in a flashing manner to output illumination light beams; a polarization converter unit (3,4) configured to match the polarization directions of the illumination light beams emitted from the at least two light source units (1,2); a liquid crystal cell (6) configured to receive the illumination light beams outputted from the polarization converter unit (3,4); and a control unit (74;20,21,25) configured to control, in synchronization, the liquid crystal cell (6) and the light source units (1,2) so as to intermittently drive the light source units and substantially continuously output illumination light beams from the liquid crystal cell (6).

## Description

### BACKGROUND OF THE INVENTION

### 1. FIELD OF THE INVENTION

The present invention provides an illumination apparatus that is capable of supplying high-luminance illumination light and an image projector that includes the illumination apparatus.

This application is based on Japanese Patent Application Nos. 2006-234203 and 2006-343979, the contents of which are incorporated herein by reference.

### 2. DESCRIPTION OF RELATED ART

In the related art, for example, illumination apparatuses that include a plurality of light-emitting diodes (LEDs), a polarization beam splitter, and a liquid crystal panel and that are capable of outputting light having the same polarization direction have been proposed (Japanese Unexamined Patent Applications, Publication Nos. 2005-257872, 2005-283818, and 2005-183470). By intermittently driving the LEDs of such an illumination apparatus, illumination light having a high overall luminance can be output by applying an electrical current higher than the rated current to each LED.

The illumination apparatus disclosed in Japanese Unexamined Patent Application, Publication No. 2006-034330 irradiates a polarization beam splitter with illumination light beams from different directions emitted from different light sources and outputs a combined light beam obtained by combining the different light beams at the polarization beam splitter.

However, with a known illumination apparatus, such as those described above, there is a problem in that the light use efficiency is low since the efficiency of producing linearly polarized light beams before they enter the polarization beam splitter is low.

With an illumination apparatuses such as that described above, an LED is used as a light source and a liquid crystal cell is used as a polarization converter unit. However, since drive control that takes into consideration the response characteristics of these two units is not carried out, there is a problem in that a change in the light intensity occurs in the illumination light.

### BRIEF SUMMARY OF THE INVENTION

The present invention provides an illumination apparatus and an image projector using the same that can increase the light utilization ratio and decrease a change in intensity of illumination light.

A first aspect of the present invention provides an illumination apparatus including at least two light source units capable of being driven in a flashing manner to output illumination light beams; a polarization converter unit configured to make the polarization directions of the illumination light beams emitted from the at least two light source units; a liquid crystal cell configured to receive the illumination light beams outputted from the polarization converter unit match; and a control unit configured to control, in synchronization, the liquid crystal cell and the light source units so as to intermittently drive the light source units and substantially continuously output illumination light beams from the liquid crystal cell.

According to this structure, the polarization converter unit unifies the polarization directions of the illumination light beams emitted from the at least two light source units and outputs the illumination light beams to the liquid crystal cell. The liquid crystal cell outputs the illumination light beams with a unified polarization direction outputted from the polarization converter unit without changing the polarization direction or after rotating the polarization direction by 90 degrees. In this case, since the control unit intermittently drives the light source units, an electrical current greater than a rated current can be applied to the light source units. In this way, bright illumination light can be obtained. Since the flashing timing of the light source units and the driving of the liquid crystal cell are controlled in synchronization, for example, by changing the polarization direction of light transmitted through the liquid crystal cell in accordance with the illumination timing of the light source units, the polarization direction of the illumination light outputted from the liquid crystal cell can always be set to a desired polarization direction.

In the above, "substantially continuously" includes a case in which the illumination periods of the at least two light source units overlap with each other and a case in which flash driving is carried out so that the illumination periods of the at least two light source units do not overlap. Here, for the latter, the period when neither light source unit is illuminated is a length of time that cannot be recognized by the observer (i.e., cannot be perceived as a flicker) and is, for example, 1/60 second or shorter.

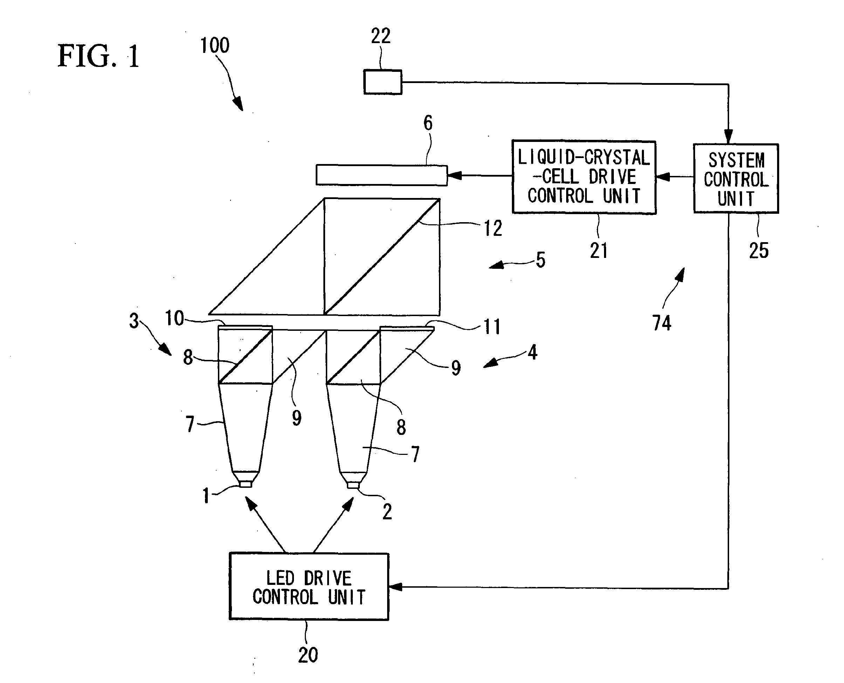

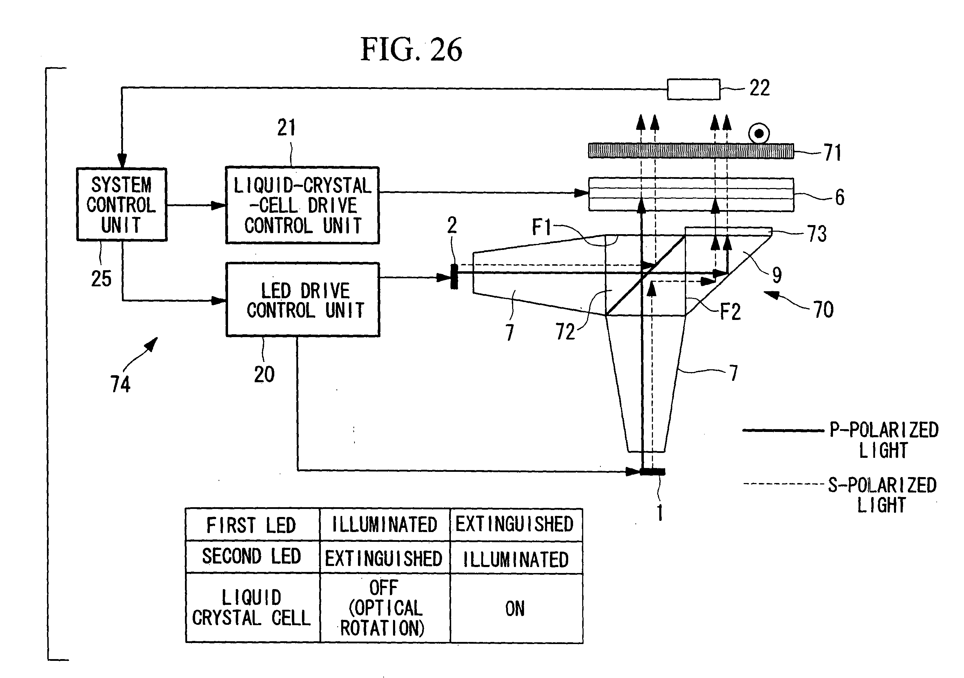

The light modulating unit is equivalent to, for example a polarization converter unit 3 and a polarization converter unit 4 of an illumination apparatus according to a first embodiment, shown in Fig. 1. Furthermore, it is equivalent to a polarization converter unit 70 of an illumination apparatus according to a fifth embodiment, described below with reference to Fig. 26.

A second aspect of the present invention provides an illumination apparatus including at least two light source units capable of being driven in a flashing manner to output illumination light beams; a polarization converter unit configured to convert the polarization directions of the illumination light beams emitted from the at least two light source units such that the polarization directions orthogonally intersect with each other; a light-combining unit configured to combine two illumination light beams having polarization directions orthogonally intersecting with each other without changing the polarization directions; a liquid crystal cell configured to receive the illumination light beams combined at the light-combining unit; and a control unit configured to control, in synchronization, the liquid crystal cell and the light source units such that illumination light is substantially continuously outputted from the liquid crystal cell.

According to this structure, for example, the polarization direction of the illumination light beams emitted from the two light source units are converted into two orthogonally intersecting directions by the polarization converter unit. The illumination light beams having the converted polarization directions are incident on the light-combining unit. Then, the illumination light beams with the polarization directions orthogonally intersecting each other are combined at the light-combining unit. The combined illumination light is guided to the liquid crystal cell capable of rotating the polarization direction of transmitted light. Here, the polarization direction of the illumination light is changed in a predetermined direction, and the illumination light is incident on a predetermined illumination region. In this case, since the control unit controls the polarization direction of the light transmitted through the liquid crystal cell and the flashing timing of the light source units, by, for example, intermittently driving the light source units, an electrical current greater than a rated current can be applied to the light source units, and the polarization direction of the light transmitted through the liquid crystal cell is changed in accordance with the intermittent drive timing. In this way, bright illumination light having a desired polarization direction can be obtained.

The above-described illumination apparatus may further include a detection unit configured to detect the intensity of the illumination light transmitted through the liquid crystal cell, wherein the control unit may control the liquid crystal cell and the light source units on the basis of the result detected by the detection unit.

According to this structure, since the detection unit detects the intensity of the illumination light transmitted through the liquid crystal cell and the control unit controls the liquid crystal cell and the light source units on the basis of the result detected by the detection unit, the intensity of the illumination light transmitted through the liquid crystal cell can be controlled at a desired value. In this way, for example, the light intensity can be maintained constant and temperature changes and temporal changes can be managed.

In the above-described illumination apparatus, the control may intermittently drive the light source units and switch the light source unit to be illuminated during a transition period when the polarization direction of the illumination light transmitted through the liquid crystal cell is changed from a first direction to a second direction that is orthogonal to the first direction.

According to this structure, since switching of the light source units is carried out during the transition period when the polarization direction of the illumination light transmitted through the liquid crystal cell is changed from a first direction to a second direction that is orthogonal to the first direction, a change in light intensity caused by switching the light source units can be reduced. In this way, a change in light intensity that is noticeable by the observer can be prevented, and the intensity of the illumination light can be stabilized.

In the above-described illumination apparatus, the control unit may switch the light source unit to be illuminated near an intermediate point of the transition period.

According to this structure, since the light source units are switched when the polarization direction of the illumination light transmitted through the liquid crystal cell is near an intermediate point between a first polarization direction and a second polarization direction orthogonally intersecting with the first polarization direction, the intensity of the illumination light transmitted and outputted through the liquid crystal cell can be maintained substantially constant. In this way, a change in the intensity of illumination light caused by switching the light source units can be further reduced.

In the above-described illumination apparatus, the control unit may intermittently drive the light source units and control the light source units such that illumination light beams having polarization directions orthogonal to each other are incident on the liquid crystal cell during a transition period when the polarization direction of the illumination light transmitted through the liquid crystal cell is changed from a first direction to a second direction that is orthogonal to the first direction.

According to this structure, since illumination light beams having polarization directions orthogonal to each other are incident on the liquid crystal cell during a transition period when the polarization direction of the illumination light transmitted through the liquid crystal cell is changed from a first direction to a second direction that is orthogonal to the first direction, a change in the intensity of illumination light during the transition period can be prevented. In this way, stable illumination light can be outputted.

In the above-described illumination apparatus, the control unit may intermittently drive the light source units and control the light source units such that the light source units are all turned off during a transition period when the polarization direction of the illumination light transmitted through the liquid crystal cell is changed from a first direction to a second direction that is orthogonal to the first direction.

According to this structure, since both light source units are turned off during the transition period when the polarization direction of the illumination light transmitted through the liquid crystal cell is changed from a first direction to a second direction that is orthogonal to the first direction, the light source units can be prevented from being illuminated during a period when the light utilization ratio is low. In this way, the light utilization ratio can be increased, and electrical power consumption can be reduced.

In the above-described illumination apparatus, the polarization converter unit may include a polarization beam splitter provided for each of the light source units and configured to split illumination light emitted from the corresponding light source unit into P-polarized light and S-polarized light, and a polarizing unit configured to match the polarization direction of one illumination light beam split at the polarization beam splitter with the polarization direction of the other split illumination light beam.

According to this structure, the illumination light beams emitted from the light source units are incident on the polarization beam splitters for those light source units and are split into P-polarized light and S-polarized light. One of the P-polarized light beam and the S-polarized light beam is polarized by the polarization unit such that the polarization direction matches that of the other illumination light beam. In this way, the polarization components of the illumination light beams emitted from the light source units are set to S-polarized light or P-polarized light.

A third aspect of the present invention provides an illumination apparatus including a first light source unit; a second light source unit; a first polarization converter unit configured to match the polarization direction of illumination light emitted from first light source unit to a first polarization direction and output the illumination light; a second polarization converter unit configured to match the polarization direction of illumination light emitted from second light source unit to a second polarization direction orthogonal to the first polarization direction and output the illumination light; a light-combining unit configured to combine light emitted from the first light source unit and light emitted from the second light source unit; a liquid crystal cell configured to receive illumination light combined at the light-combining unit and convert the polarization direction of the illumination light; and a control unit configured to intermittently drive the first light source unit and the second light source unit and control, in synchronization, the liquid crystal cell, the first light source unit, and the second light source unit so as to substantially continuously output illumination light from the liquid crystal cell.

According to this structure, the polarization direction of the illumination light beam emitted from the first light source unit is unified to a first direction by the first polarization converter unit, and then the illumination light beam is guided to the light-combining unit. The illumination light beam emitted from the second light source unit is unified with a second direction orthogonal to the first direction by the first polarization converter unit, and then the illumination light beam is guided to the light-combining unit. At the light-combining unit, illumination light beams having polarization directions orthogonally intersecting with each other are combined, and then the combined illumination light is guided to the liquid crystal cell. In this case, since the liquid crystal cell, the first light source unit, and the second light source unit are controlled, in synchronization, by the control unit such that illumination light beams are substantially continuously outputted from the liquid crystal cell, illumination light can be continuously provided at a predetermined illumination region.

In the above-described illumination apparatus, when a light-combining unit comprises a polarization beam splitter, the control unit may control an illumination unit such that the intensity of P-polarized light incident on the polarization beam splitter is greater than the intensity of S-polarized light on the basis of incident-angle dependency of transmissivity of P-polarized light and transmissivity of S-polarized light of the polarization beam splitter.

A polarization beam splitter has a characteristic whereby the reflectivity of S-polarized light is greater than the transmisivity of P-polarized light. Thus, when a polarization beam splitter is used as the light-combining unit, by setting the intensity of the P-polarized light incident on the polarization beam splitter to be greater than the intensity of the S-polarized light, the intensity of the P-polarized light and the intensity of the S-polarized light, of the illumination light combined at and outputted from the polarization beam splitter, can be made substantially the same.

In the above-described illumination apparatus, when the illumination apparatus comprises two of the light source units, the polarization converter unit may include a polarization beam splitter configured to split first illumination light emitted from one light source unit into P-polarized light and S-polarized light, split second illumination light emitted from the other light source unit into P-polarized light and S-polarized light, output the P-polarized light of the first illumination light and the S-polarized light of the second illumination light from a first output surface, and output the S-polarized light of the first illumination light and the P-polarized light of the second illumination light from a second output surface, and a polarization unit configured to convert the polarization direction of illumination light outputted from the first output surface or the second output surface of the polarization beam splitter.

According to this structure, the first illumination light and the second illumination light emitted from the two light source units are incident on different incident surfaces of the polarization beam splitter. In the polarization beam splitter, the first illumination light and the second illumination light are each split into S-polarized light and P-polarized light. The P-polarized light of the first illumination light and the S-polarized light of the second illumination light are outputted from the first output surface, and the S-polarized light of the first illumination light and the P-polarized light of the second illumination light are outputted from the second output surface. The illumination light outputted from the first output surface or the second output surface is incident on the polarization unit, where the polarization direction of the illumination light is changed before emission. In this way, the polarization direction of the first illumination light outputted from the polarization converter unit is set to one direction. Similarly, the polarization direction of the second illumination light is set to another direction. The polarization directions of the first illumination light and the second illumination light orthogonally intersect with each other.

A fourth aspect of the present invention provides an illumination apparatus including at least two light source units capable of being driven in a flashing manner to output illumination light beams; a light splitting unit configured to split illumination light emitted from the light source units into P-polarized light and S-polarized light and to output the P-polarized light and S-polarized light; a polarization converter unit configured to match the polarization direction of one illumination light beam outputted from the light splitting unit with the polarization direction of the other illumination light beam; a liquid crystal cell configured to receive the illumination light beams outputted from the polarization converter unit; and a control unit configured to control, in synchronization, the polarization converter unit and the light source units so as to intermittently drive the light source units and substantially continuously output illumination light from the liquid crystal cell.

According to this structure, the illumination light beams emitted from the at least two light sources are split into S-polarized light and P-polarized light at the light-splitting unit and are incident on the polarization converter unit. At the polarization converter unit, the polarization direction of one of the illumination light beams outputted from the light-splitting unit is matched with the polarization direction of the other illumination light beam, and then the illumination light beams are outputted. In this way, the polarization directions of the illumination light beams outputted from the polarization converter unit are set to one direction. Furthermore, since the light source units are intermittently driven, an electrical current greater than a rated current can be applied to the light source units. In this way, bright illumination light can be obtained.

In the above-described illumination apparatus, the polarization converter unit may be a liquid crystal cell including two liquid crystal cell regions that are controllable independently.

According to this structure, since the polarization converter unit is a liquid crystal cell including two independently drivable liquid crystal cell regions, illumination light having a desired polarization direction can be obtained by driving the liquid crystal cell regions in accordance with the polarization direction of the incident illumination light.

A fifth aspect of the present invention provides an image projector configured to project an image on the basis of input image information, the image projector including the above-described illumination apparatus; a light modulating unit configured to modulate illumination light outputted from the illumination apparatus on the basis of input image information; and a projection optical unit configured to project illumination light modulated at the light modulating unit.

According to this structure, since image projection is carried out by using bright illumination light having a desired polarization direction, a very bright and easily visible image can be projected.

The illumination apparatus according to the present invention is advantageous in that the light utilization ratio is increased and a change in the intensity of illumination light is reduced.

The image projector according to the present invention is advantageous in that a very bright and easily visible image is projected.

### BRIEF DESCRIPTION OF THE SEVERAL VIEWS OF THE DRAWINGS

Fig. 1 illustrates the overall configuration of an illumination apparatus according to a first embodiment of the present invention.

Fig. 2 illustrates the polarization directions in the illumination apparatus shown in Fig. 1.

Fig. 3 is a timing chart illustrating the drive control timings of a liquid crystal cell and LEDs of the illumination apparatus according to the first embodiment of the present invention.

Figs. 4A and 4B are flow charts illustrating the procedure of adjustment processing.

Fig. 5 is a timing chart illustrating the procedure of adjustment processing when the transition of the liquid crystal cell according to the first embodiment of the present invention is delayed.

Fig. 6 is a timing chart illustrating the procedure of adjustment processing when the transition of the liquid crystal cell according to the first embodiment of the present invention is advanced.

Fig. 7 illustrates an example of an incident angle dependency of a polarization beam splitter.

Fig. 8 illustrates example values of electrical currents to be applied to a first LED and a second LED when the incident angle dependency of the polarization beam splitter is taken into consideration.

Fig. 9 illustrates an example of the wavelength-dependent transmittance of the liquid crystal cell.

Fig. 10 illustrates a first modification of the illumination apparatus shown in Fig. 1.

Fig. 11 illustrates a second modification of the illumination apparatus shown in Fig. 1.

Fig. 12 illustrates a third modification of the illumination apparatus shown in Fig. 1.

Fig. 13 is a timing chart illustrating the drive control timings of a liquid crystal cell and LEDs of the illumination apparatus according to a second embodiment of the present invention.

Fig. 14 is a timing chart illustrating the procedure of adjustment processing when the transition of the liquid crystal cell according to the second embodiment of the present invention is delayed.

Fig. 15 is a timing chart illustrating the procedure of adjustment processing when the transition of the liquid crystal cell according to the second embodiment of the present invention is advanced.

Fig. 16 is a timing chart illustrating the drive control timings of a liquid crystal cell and LEDs of the illumination apparatus according to a third embodiment of the present invention.

Fig. 17 is a timing chart illustrating the procedure of adjustment processing when the transition of the liquid crystal cell according to the third embodiment of the present invention is delayed.

Fig. 18 is a timing chart illustrating the procedure of adjustment processing when the transition of the liquid crystal cell according to the third embodiment of the present invention is advanced.

Fig. 19 illustrates the overall configuration of an illumination apparatus according to a fourth embodiment of the present invention.

Fig. 20 illustrates the polarization directions and optical path when a first LED is illuminated in the illumination apparatus shown in Fig. 19.

Fig. 21 illustrates the polarization directions and optical path when a second LED is illuminated in the illumination apparatus shown in Fig. 19.

Fig. 22 illustrates the polarization directions and optical path when a third LED is illuminated in the illumination apparatus shown in Fig. 19.

Fig. 23 is a timing chart illustrating the drive control timings of a liquid crystal cell and LEDs of the illumination apparatus according to the fourth embodiment of the present invention.

Fig. 24 illustrates a first application example of the illumination apparatus according to one of the embodiments of the present invention.

Fig. 25 illustrates the overall configuration of an image projector employing the illumination apparatus according to one of the embodiments of the present invention.

Fig. 26 illustrates the overall configuration of an illumination apparatus according to a fifth embodiment of the present invention.

Fig. 27 illustrates polarization states when a first LED is illuminated in the illumination apparatus shown in Fig. 26.

Fig. 28 illustrates polarization states when a second LED is illuminated in the illumination apparatus shown in Fig. 26.

Fig. 29 illustrates the index of refraction of optical elements included in the illumination apparatus shown in Fig. 26.

Fig. 30 illustrates a modification of the illumination apparatus according to the fifth embodiment of the present invention.

Fig. 31 illustrates the overall configuration of a modification of the illumination apparatus according to a sixth embodiment of the present invention and illustrates the polarization states when a first LED is illuminated.

Fig. 32 illustrates the overall configuration of the modification of the illumination apparatus according to the sixth embodiment of the present invention and illustrates the polarization states when a second LED is illuminated.

Fig. 33 illustrates, in outline, a two-electrode liquid crystal cell.

Fig. 34 illustrates a modification of the illumination apparatus according to the sixth embodiment of the present invention.

Fig. 35 illustrates the overall configuration of an illumination apparatus according to a seventh embodiment of the present invention and illustrates the polarization state when a first LED is illuminated.

Fig. 36 illustrates the overall configuration of the illumination apparatus according to the seventh embodiment of the present invention and illustrates the polarization states when a second LED is illuminated.

Fig. 37 illustrates the overall configuration of the illumination apparatus according to the seventh embodiment of the present invention and illustrates the polarization states when a third LED is illuminated.

Fig. 38 is a timing chart illustrating the drive control timings of a liquid crystal cell and LEDs of the illumination apparatus according to the seventh embodiment of the present invention.

Fig. 39 illustrates, in outline, the overall configuration of an image projector according to a third application example.

Fig. 40 illustrates, in outline, the overall configuration of an image projector according to a fourth application example.

Fig. 41 illustrates an example structure of a first LED of an illumination apparatus included in the image projector shown in Fig. 40.

Fig. 42 illustrates an example structure of a second LED of an illumination apparatus included in the image projector shown in Fig. 40.

### DETAILED DESCRIPTION OF THE INVENTION

Embodiments of the image projector according to the present invention will be described below with reference to the drawings.

### First Embodiment

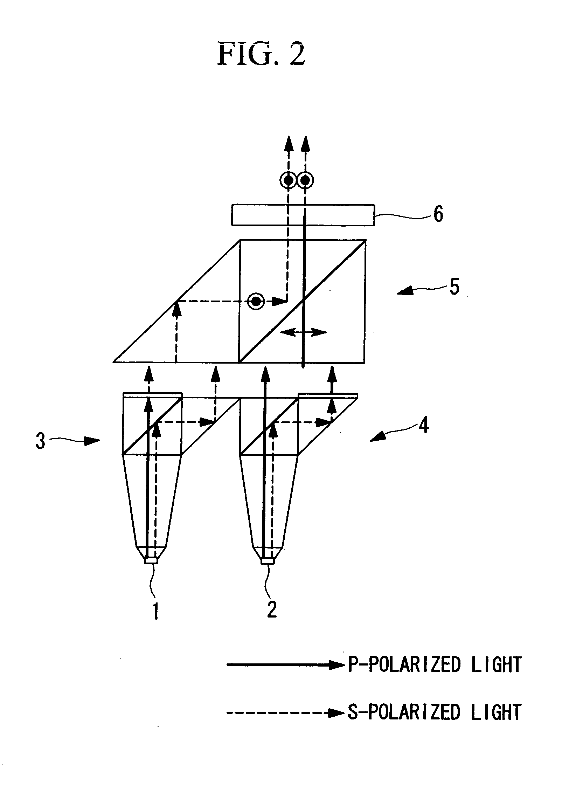

Fig. 1 illustrates, in outline, the structure of an illumination apparatus 100 according to a first embodiment of the present invention. Fig. 2 illustrates the polarization states of the illumination apparatus 100 illustrated in Fig. 1.

As shown in Fig. 1, the illumination apparatus 100 according to this embodiment includes a first light-emitting diode (LED: first light source unit) 1, a second LED (second light source unit) 2, a polarization converter unit (first polarization converter unit) 3 that aligns the polarization directions of the illumination light beams emitted from the first LED 1 in a first polarization direction, a polarization converter unit (second polarization converter unit) 4 that matches the polarization directions of the illumination light beams emitted from the second LED 2 to a second polarization orthogonal to the first polarization direction, a light-combining unit 5 that combines the light outputted from the polarization converter unit 3 and the polarization converter unit 4, a liquid crystal cell 6 that is irradiated with the illumination light combined at the light-combining unit 5 and that is capable of changing the polarization direction of the combined illumination light, and a control device 74 that intermittently drives the first LED and the second LED and synchronously controls the liquid crystal cell 6, the first LED 1, and the second LED 2 such that illumination light is substantially continuously outputted from the liquid crystal cell 6.

A tapered rod 7 is interposed between the first LED 1 and the polarization converter unit 3. In this way, the illumination light emitted from the first LED 1 is guided to the polarization converter unit 3 after being more highly collimated. The polarization converter unit 3 includes a polarization beam splitter 8, a triangular prism 9, and a half-wave plate 10. The polarization beam splitter 8 is disposed at a 45-degree angle to the optical axis of the illumination light from the first LED 1. The polarization beam splitter 8 is formed by bonding two triangular prisms. On the bonding surface, a polarization splitting film that transmits P-polarized light and reflects S-polarized light is provided. Instead, a filter-type beam splitter may be used.

The optical path of the S-polarized light reflected at the polarization beam splitter 8 is deflected by 90 degrees by the triangular prism 9 so that the S-polarized light becomes parallel to the P-polarized light. Then, the S-polarized light enters the light-combining unit 5. The reflective surface of the triangular prism 9 may be covered with a polarization splitting film or a mirror coating. In this way, the S-polarized light can be totally reflected and guided to the light-combining unit 5.

The P-polarized light transmitted through the polarization beam splitter 8 is converted into S-polarized light by being transmitted through the half-wave plate 10 so that the polarization direction is rotated by 90 degrees. Then, the P-polarized light enters the light-combining unit 5. In this way, the illumination light emitted from the first LED 1 is converted into S-polarized light at the polarization converter unit 3 and enters the light-combining unit 5.

The polarization converter unit 4 has substantially the same structure as that of the polarization converter unit 3 described above. However, the polarization converter unit 4 includes a half-wave plate 11 disposed in the optical path of the S-polarized light. In this way, the illumination light emitted from the second LED 2 is converted into P-polarized light at the polarization converter unit 4 and enters the light-combining unit 5.

The P-polarized light and the S-polarized light that enter the light-combining unit 5 are combined at a polarization beam splitter 12 included in the light-combining unit 5. Then, the combined light is guided to the liquid crystal cell 6. The liquid crystal cell 6, for example, is a twisted nematic (TN) liquid crystal. When no voltage is applied (hereinafter this state is referred to as an "OFF state"), the liquid crystal cell 6, rotates the polarization direction of incident light by 90 degrees and, when a voltage is applied (hereinafter this state is referred to as an "ON state"), it directly transmits incident light without rotating the polarization direction.

The control device 74 includes an LED drive control unit 20 that drives the first LED 1 and the second LED 2, a liquid-crystal-cell drive control unit 21 that drives the liquid crystal cell 6, and a system control unit 25 that controls the liquid-crystal-cell drive control unit 21 and the LED drive control unit 20 in synchronization.

A light-intensity sensor 22 that detects the light intensity of illumination light is provided on the emission side of the liquid crystal cell 6. The detection result of the light-intensity sensor 22 is output to the system control unit 25. On the basis of the detection result of the light-intensity sensor 22, the system control unit 25 controls the liquid-crystal-cell drive control unit 21 and the LED drive control unit 20 in synchronization so that the light intensity of the illumination light outputted from the liquid crystal cell 6 is substantially constant.

For example, when the illumination apparatus 100 is used as a light source for an image projector, it is desirable to dispose the light-intensity sensor 22 near a projection lens aperture (not shown) or near a light modulator, such as a liquid crystal panel for displaying an image. In some cases, the light-intensity sensor 22 may be disposed on the light modulator itself. In such a case, to avoid forming a shadow on the light-intensity sensor 22, it is desirable to receive light, for example, during start-up or after a predetermined amount of time and to store the sensor somewhere else during other times.

In the illumination apparatus 100 having such a structure, the system control unit 25 outputs a drive control command to the liquid-crystal-cell drive control unit 21 so that the liquid crystal cell 6 alternates between an ON state and an OFF state and outputs, in synchronization with this drive control command, an illumination control command to the LED drive control unit 20 so that the first LED 1 and the second LED 2 are alternately illuminated.

More specifically, the system control unit 25 controls the LED drive control unit 20 and the liquid-crystal-cell drive control unit 21 so that the first LED 1 is illuminated when the liquid crystal cell 6 is in the OFF state and the second LED 2 is illuminated when the liquid crystal cell 6 is in the ON state.

By carrying out such control, as shown in Fig. 2, while the first LED 1 is illuminated, a first illumination light beam emitted from the first LED 1 is uniformly converted into S-polarized light at the polarization converter unit 3 and is guided to the liquid crystal cell 6 through the light-combining unit 5. In this case, since the liquid crystal cell 6 is in the ON state, the S-polarized light is directly outputted without its polarization direction being changed. On the other hand, while the second LED 2 is illuminated, a second illumination light beam emitted from the second LED 2 is uniformly converted into P-polarized light at the polarization converter unit 4 and is guided to the liquid crystal cell 6 through the light-combining unit 5. In this case, since the liquid crystal cell 6 is in the OFF state, the P-polarized light is converted into S-polarized light by rotating the polarization direction by 90 degrees and is then outputted. In this way, illumination light having only S-polarized components is constantly outputted from the liquid crystal cell 6.

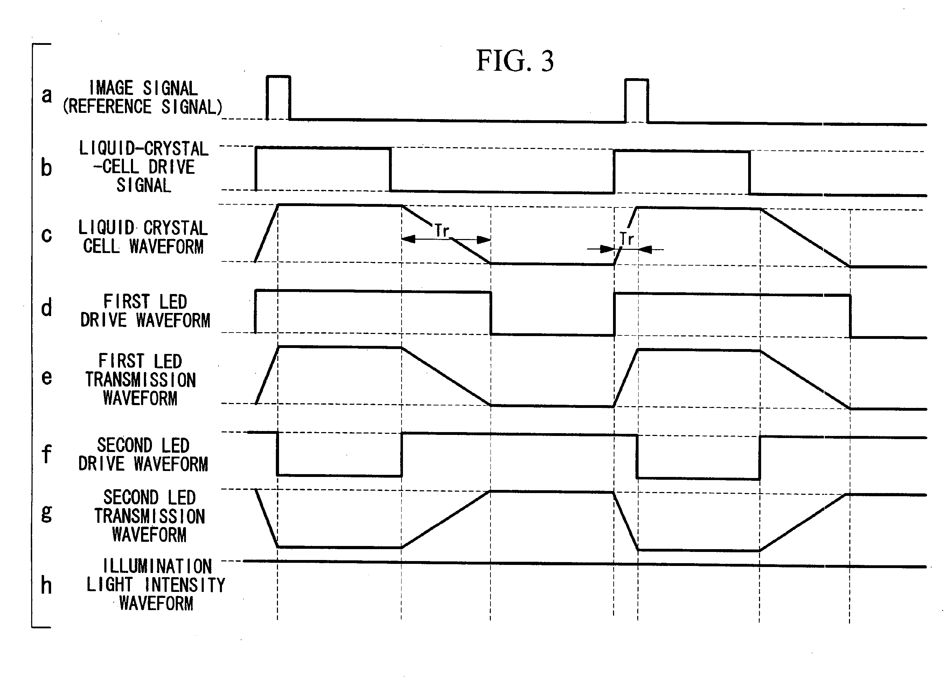

Since the response time of the liquid crystal cell 6 is lower than the LEDs (hereinafter, when the first LED 1 and the second LED 2 do not have to be distinguished, these will be simply referred to as "LEDs"), as shown in Fig. 3b, when a liquid-crystal-cell drive signal is switched from on to off or from off to on as a pulsed signal, as shown in Fig. 3c, a predetermined amount of time (herein after this amount of time is referred to as a "transition period Tr") is required for the orientation of the liquid crystal cell 6 to stabilize. Since both polarization states are present in this transition period Tr, both S-polarized light and P-polarized light are included in light transmitted through the liquid crystal cell 6. Therefore, for example, when a polarizing modulator, such as a liquid crystal display (LCD) panel or a reflective liquid crystal panel (liquid crystal on silicon (LCOS)), is disposed downstream of the liquid crystal cell 6, part of the light is not used, causing a change in the light intensity.

For this reason, according to this embodiment, both the first LED 1 and the second LED 2 are illuminated during the transition period Tr (refer to Figs. 3d and 3f). In this way, as shown in Fig. 3h, illumination light of constant luminance can be outputted from the illumination apparatus 100 during the transition period Tr. In Fig. 3, "a" represents an image signal obtained when applying the illumination apparatus 100 to an image projector, "b" represents a drive signal for the liquid crystal cell 6, "c" represents a signal that indicates the orientation of the liquid crystal cell 6, "d" represents a drive signal for the first LED 1, "e" represents a light-intensity waveform of the emission side of the liquid crystal cell 6 when light emitted from the first LED 1 is incident on the liquid crystal cell 6, "f" represents a drive signal for the second LED 2, "g" represents a light-intensity waveform of the emission side of the liquid crystal cell 6 when light emitted from the second LED 2 is incident on the liquid crystal cell 6, and "h" represents the light intensity of the emission side of the liquid crystal cell 6, obtained by adding the transmission waveform of the first LED 1 shown in Fig. 3e and the transmission waveform of the second LED 2 shown in Fig. 3g. In the timing charts, described below, the same waveforms are presented.

As described above, in the illumination apparatus 100 according to this embodiment, the system control unit 25 alternately illuminates the first LED 1 and the second LED 2 in this order by intermittently driving the first LED 1 and the second LED 2. In this way, since an electrical current greater than a rated current can be applied to the first LED 1 and the second LED 2, the luminance of the illumination light can be increased. Moreover, since the first LED 1, the second LED 2, and the liquid crystal cell 6 are controlled in coordination, illumination light having a desired polarization direction and high luminance can be outputted.

In the illumination apparatus 100 according to this embodiment, since both the first LED 1 and the second LED 2 are illuminated during the transition period Tr in which the liquid crystal cell 6 switches from an ON state to an OFF state or from an OFF state to an ON state, the intensity of the illumination light of the illumination apparatus 100 can be maintained constant. Even when the response timing of the liquid crystal cell 6 and the illumination and extinction timings of the first LED 1 and the second LED 2 do not match, the change in intensity of the illumination light in a predetermined polarization direction can be reduced. In this way, stable illumination light that does not undergo a change in light intensity can be outputted.

In the illumination apparatus 100 according to this embodiment, the illumination and extinction timings of the first LED 1 and the second LED 2 can be adjusted in real time in accordance with the response characteristic of the liquid crystal cell 6. In other words, since the response of the liquid crystal cell 6 differs for each individual cell and has temperature characteristics, the transition period Tr changes in accordance with the usage state. For example, when the ambient temperature rises, the response improves and the transition period Tr is shortened, whereas when the ambient temperature falls, the response worsens and the transition period Tr is extended.

Thus, it is desirable to adjust the illumination and extinction timings of the first LED 1 and the second LED 2 in accordance with the transition period Tr, which changes depending on each individual cell and ambient temperature. More specifically, the system control unit 25 adjusts the illumination and extinction timings of the first LED 1 and the second LED 2 on the basis of the light-intensity waveform of the illumination light detected by the light-intensity sensor 22. This adjustment is carried out, for example, when the illumination apparatus 100 is started up or when an execution command for adjustment is input while the illumination apparatus 100 is operating.

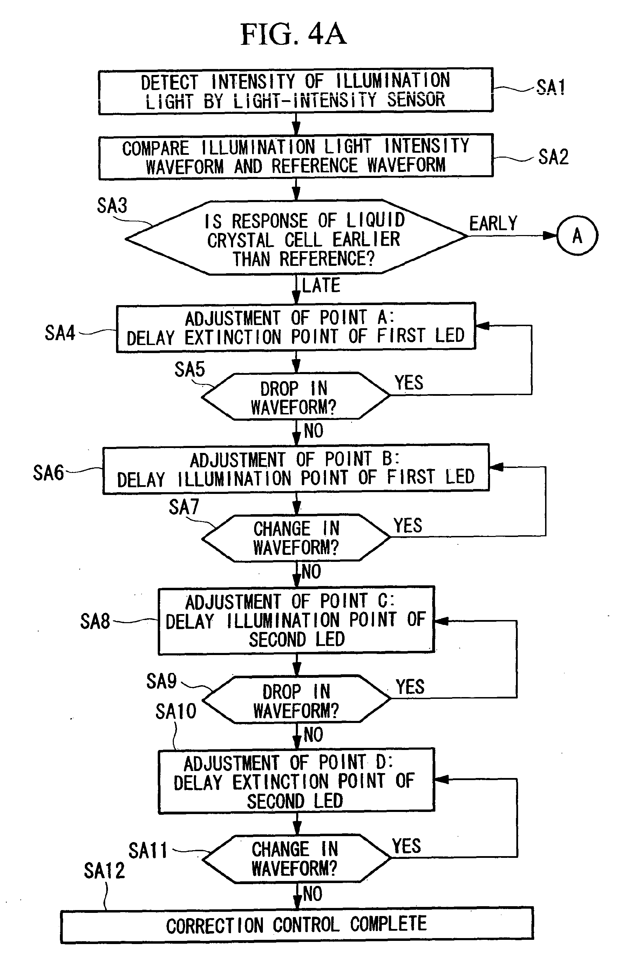

Now, the process carried out by the system control unit 25 for this adjustment will be described below with reference to Figs. 4A to 6.

First, as shown in Fig. 3, the system control unit 25 controls the liquid crystal cell 6, the first LED 1, and the second LED 2 in synchronization in accordance with a preset drive timing. In this way, the above-described drive control is carried out, and illumination light is outputted from the illumination apparatus 100. The intensity of this illumination light is detected by the light-intensity sensor 22 provided on the emission side of the liquid crystal cell 6, and the detection result is output to the system control unit 25 (Step SA1 in Fig. 4A).

The system control unit 25 acquires in advance a reference waveform corresponding to a reference temperature. By comparing the reference waveform with the illumination-light intensity waveform detected by the light-intensity sensor 22 (Step SA2), it is determined whether the transition of the liquid crystal cell 6 occurs before or after a reference time (Step SA3).

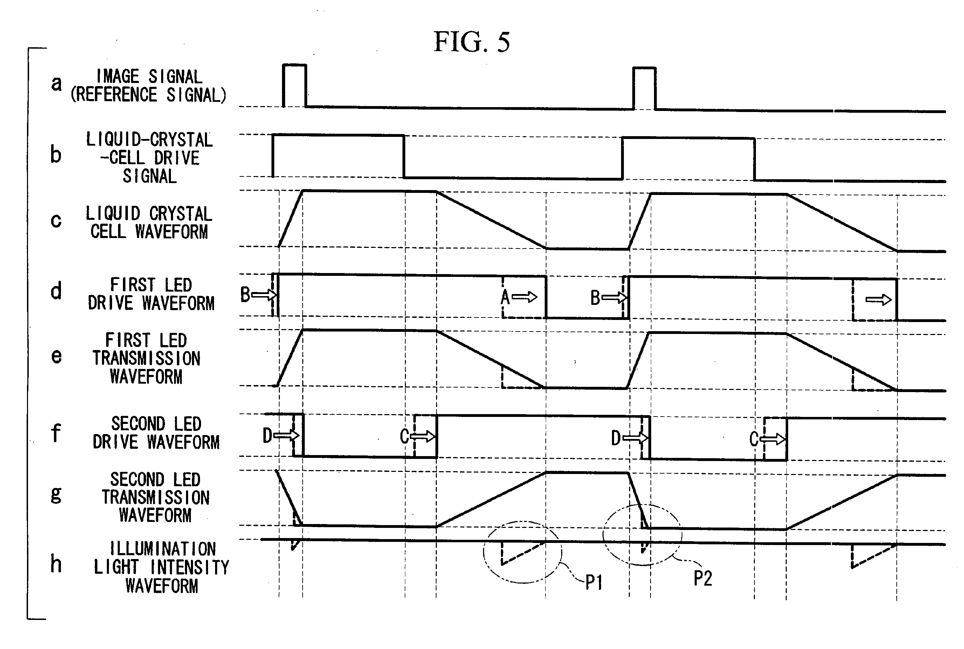

As a result, if it is determined that the transition of the liquid crystal cell 6 occurs after the reference time, the system control unit 25 delays, by a predetermined amount of time, the extinction timing of the first LED 1 when the liquid-crystal-cell drive signal is changed from the ON state to the OFF state (Step SA4; refer to arrow A in Fig. 5d). Subsequently, the system control unit 25 determines whether or not there is a drop (the section in a region P1 indicated by dotted lines) in the illumination-light intensity waveform (refer to the region P1 in Fig. 5h) (Step SA5). As a result, if a drop is detected, the process returns to Step SA4. On the other hand, if a drop is not detected, the illumination timing of the first LED 1 when the liquid-crystal-cell drive signal is changed from the OFF state to the ON state is delayed by a predetermined amount of time (Step SA6; refer to arrow B in Fig. 5d).

Subsequently, the system control unit 25 determines whether or not a change has occurred in the illumination-light intensity waveform (refer to a region P2 in Fig. 5h) or, in other words, whether or not the light intensity has decreased (Step SA7). As a result, if a change is not detected, the process returns to Step SA6.

If a change is detected in Step SA7, then the system control unit 25 delays, by a predetermined amount of time, the illumination timing of the second LED 2 when the liquid-crystal-cell drive signal is changed from the ON state to the OFF state (Step SA8; refer to arrow C in Fig. 5f). Subsequently, the system control unit 25 determines whether or not there is a drop (refer to the region P1 indicated by dotted lines) in the illumination-light intensity waveform (refer to the region P1 in Fig. 5h) (Step SA9). If a drop is detected, the process returns to Step SA8. If a drop is not detected, the system control unit 25 delays, by a predetermined amount of time, the extinction timing of the second LED 2 when the liquid-crystal-cell drive signal is changed from the OFF state to the ON state (Step SA10; refer to arrow D in Fig. 5f). Subsequently, the system control unit 25 determines whether or not a change has occurred in the illumination-light intensity waveform (refer to a region P2 in Fig. 5h) or, in other words, whether or not the light intensity has decreased (Step SA11). As a result, if a change is not detected, the process returns to Step SA10. If a change is detected, the adjustment process is completed (Step SA12) .

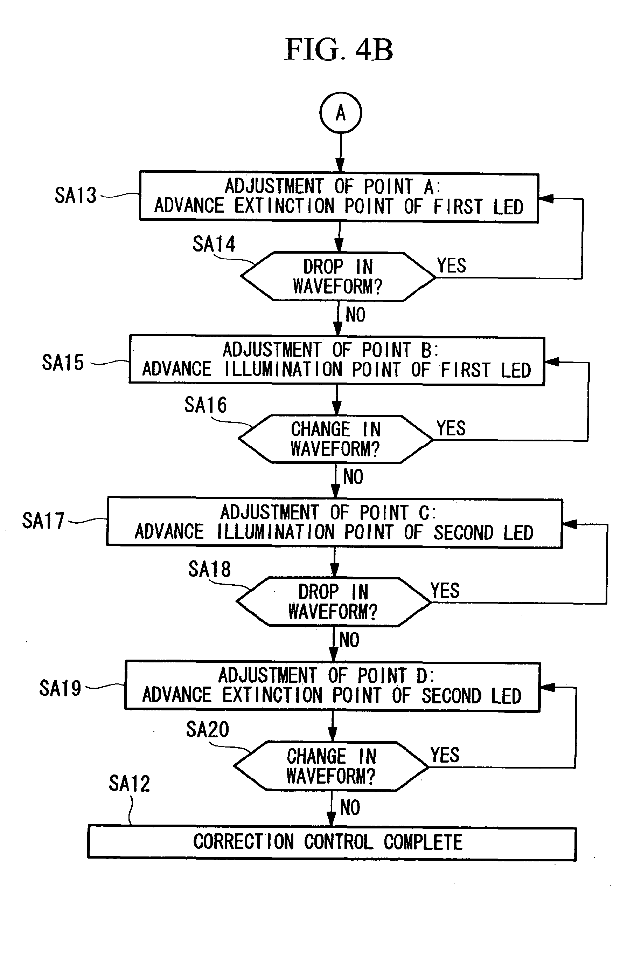

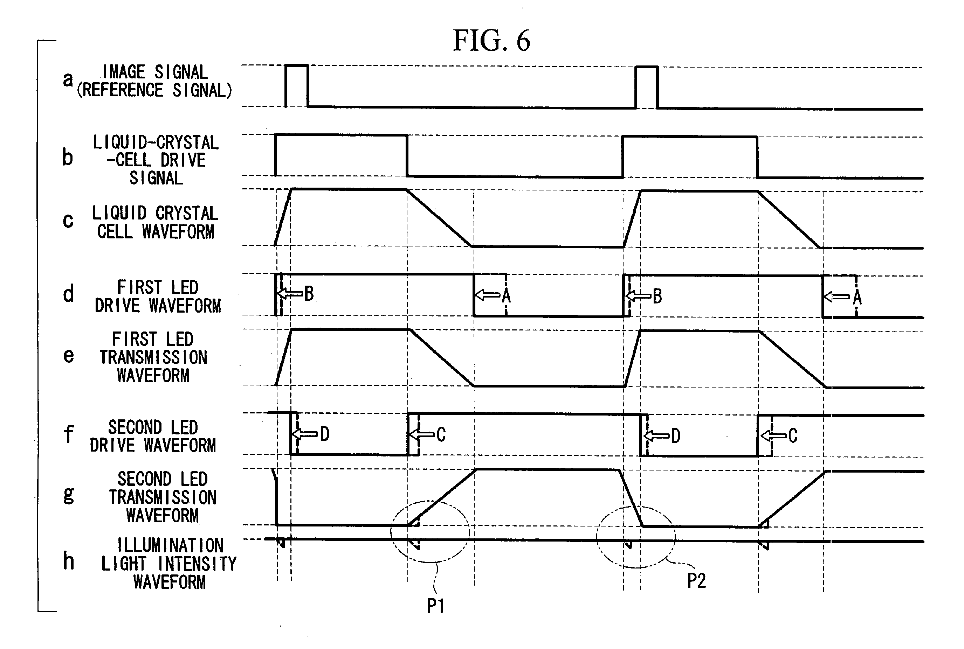

In contrast, when the response of the liquid crystal cell 6 is earlier than the reference time in Step SA3, the system control unit 25 advances, by a predetermined amount of time, the extinction timing of the first LED 1 when the liquid-crystal-cell drive signal is changed from the ON state to the OFF state (Step SA13 in Fig. 4B; refer to arrow A in Fig. 6d). Subsequently, the system control unit 25 determines whether or not a there is a drop (the section in a region P1 indicated by dotted lines) in the illumination-light intensity waveform (refer to the region P1 in Fig. 6h) (Step SA14). As a result, if a drop is detected, the process returns to Step SA13. On the other hand, if a drop is not detected, the system control unit 25 advances, by a predetermined amount of time, the illumination timing of the first LED 1 when the liquid-crystal-cell drive signal is changed from an OFF state to an ON state (Step SA15; refer to arrow B in Fig. 6d).

Subsequently, the system control unit 25 determines whether or not a change has occurred in the illumination-light intensity waveform (refer to a region P2 in Fig. 6h) or, in other words, whether or not the light intensity has decreased (Step SA16). As a result, if a change is not detected, the process returns to Step SA15.

If a change is detected in Step SA16, the system control unit 25 advances, by a predetermined amount of time, the illumination timing of the second LED 2 when the liquid-crystal-cell drive signal is changed from an ON state to an OFF state (Step SA17 ; refer to arrow C in Fig. 6f). Subsequently, the system control unit 25 determines whether or not there is a drop (refer to the region P1 indicated by dotted lines) in the illumination-light intensity waveform (refer to the region P1 in Fig. 6h) (Step SA18). If a drop is detected, the process returns to Step SA17. If a drop is not detected, the system control unit 25 advances, by a predetermined amount of time, the extinction timing of the second LED 2 when the liquid-crystal-cell drive signal is changed from the OFF state to the ON state (Step SA19; refer to arrow D in Fig. 6f). Subsequently, the system control unit 25 determines whether or not a change has occurred in the illumination-light intensity waveform (refer to a region P2 in Fig. 6h) or, in other words, whether or not the light intensity has decreased (Step SA20). As a result, if a change is not detected, the process returns to Step SA19. If a change is detected, the adjustment process is completed (Step SA12).

By executing such an adjustment process with the system control unit 25, the drive timings of the first LED 1 and the second LED 2 can be adjusted in real time on the basis of the light-intensity waveform detected by the light-intensity sensor 22. By carrying out such adjustment, a change in the intensity of illumination light caused by the individual differences of the liquid crystal cells 6 and temperature characteristics can be prevented.

In the illumination apparatus 100 according to this embodiment, the decrease in the light-intensity of the illumination light, or, more specifically, the directions of the triangular drops (e.g., the triangular regions P1 and P2 in Figs. 5 and 6) that appear in the light-intensity waveform of the illumination light, differs when the response of the liquid crystal cell 6 is high and low with respect to a reference value. Thus, it is also possible to determine whether the response of the liquid crystal cell 6 is high or low with respect to a reference value on the basis of the triangular drop.

Without carrying out such determination process, the illumination and extinction timings of the first LED 1 and the second LED 2 may be adjusted on the basis of the change in the light-intensity waveform generated when the illumination and extinction timings of the first LED 1 and the second LED 2 are arbitrarily delayed or advanced. In such a case, if a decrease in the light intensity becomes too great in the illumination-light waveform by actually moving the drive timings of the first LED 1 and the second LED 2, the timings may be moved in the opposite directions.

According to this embodiment, to eliminate a change in light intensity caused by the temperature characteristics of the liquid crystal cell 6, the intensity of the illumination light outputted from the liquid crystal cell 6 is detected in real time, and the illumination and extinction timings of the first LED 1 and the second LED 2 are adjusted on the basis of the detected result. Instead, however, a look-up table in which the temperature and drive timing are associated with each other may be provided in advance, and the first LED 1 and the second LED 2 may be driven by referring to this look-up table.

More specifically, a look-up table in which the temperature and the drive timings of the first LED 1 and the second LED 2 are associated is stored in the system control unit 25. Furthermore, a temperature sensor that detects the ambient temperature is provided near the liquid crystal cell 6, and the temperature detected by the temperature sensor is input to the system control unit 25.

When the illumination apparatus 100 is driven, the system control unit 25 obtains from the look-up table the driving timings of the first LED 1 and the second LED 2 that correspond to the temperature detected by the temperature sensor provided near the liquid crystal cell 6 and drives the first LED 1 and the second LED 2 according to the obtained drive timings.

For example, the system control unit 25 stores sequence patterns of drive control signals for the first LED 1 and the second LED 2 corresponding to temperatures at 5-degree intervals and drives the first LED 1 and the second LED 2 by using sequence patterns of drive control signals corresponding to the temperatures periodically detected by the temperature sensor. In this way, the processing load can be reduced compared to that when timing adjustment is carried out in real time, as described above, and the processing time can be shortened.

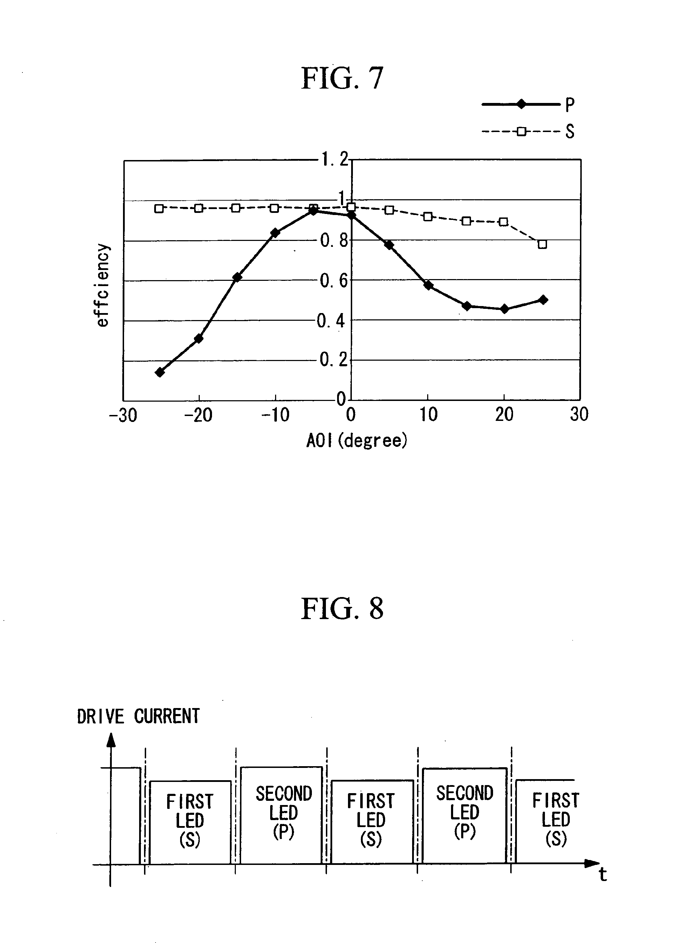

In the illumination apparatus 100 according to this embodiment, light is split into S-polarized light and P-polarized light or split light is combined by the polarization beam splitters 8 and 12. The polarization beam splitters 8 and 12 have a dependency on the angle of incidence (AOI), as shown in Fig. 7. As shown in Fig. 7, the reflectance of S-polarized light does not depend on the angle of incidence and has a high reflection efficiency, whereas the transmittance of P-polarized light highly depends on the angle of incidence. Therefore, when light from the LED, i.e., diffuse light, is incident on the polarization beam splitters 8 and 12, the intensity of the S-polarized light reflected at the polarization beam splitters 8 and 12 is greater than the intensity of the P-polarized light transmitted through the polarization beam splitters 8 and 12. Accordingly, in this embodiment, as shown in Fig. 8, the light intensity of the second LED 2 is increased by applying an electrical current greater than that applied to the first LED 1 to the second LED 2, whose light is transmitted through the polarization beam splitters 8 and 12 more times that that of the first LED 1. In this way, the intensity of the illumination light outputted from the liquid crystal cell 6 becomes substantially the same.

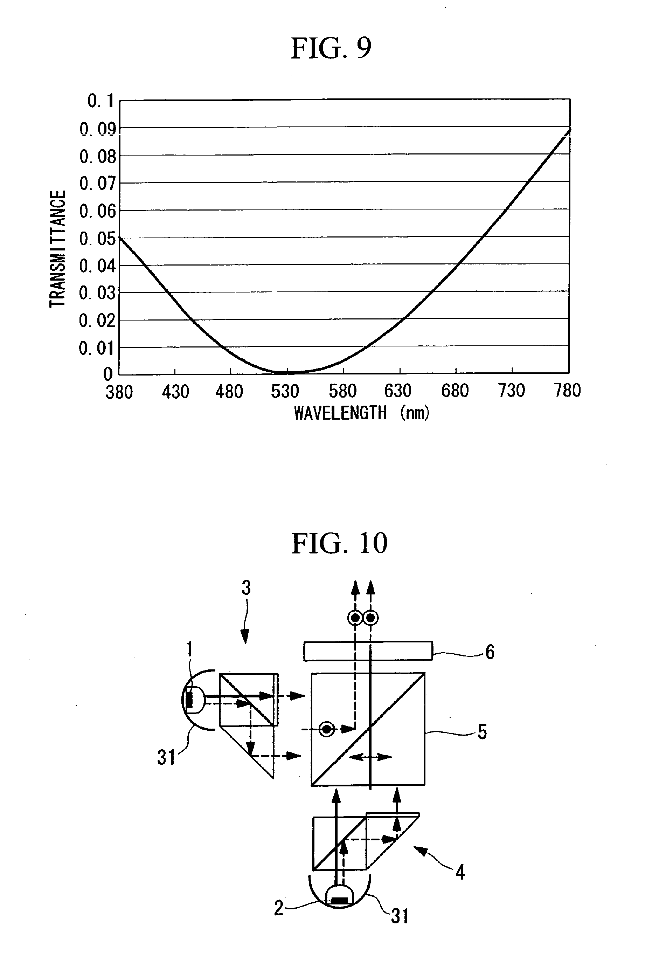

Moreover, as shown in Fig. 9, the liquid crystal cell 6 has a wavelength-dependent transmittance. Fig. 9 illustrates the transmittance when polarizing plates are provided on both sides of the liquid crystal cell 6 in crossed-Nicols arrangement. The higher the transmittance is, the more the light is elliptically-polarized. In general, liquid crystal exhibits wavelength-dependent transmittance. By reducing the retardation Δnd (where Δn represents the birefringence and d represents the thickness of the cell), the transition can be advanced, but, at the same time, the sensitivity to wavelength increases. Therefore, it is desirable to use a liquid crystal cell 6 having an optimized Δnd for the wavelength of the first LED 1 and the second LED 2 used in the illumination apparatus 100. In this way, the light use efficiency can be increased. Fig. 9 illustrates a transmittance-versus-wavelength dependency that is optimal when using light with a wavelength of 530 nm.

### First Modification

Next a modification of the above-described illumination apparatus 100 will be described.

Fig. 10 illustrates a first modification of the illumination apparatus 100. In Fig. 10, instead of the tapered rods 7 shown in Fig. 1, paraboloidal reflectors 31 are provided on backsides of the first LED 1 and the second LED 2 so as to increase the degree of collimation. Unlike the arrangement shown in Fig. 1 in which the first LED 1 and the second LED 2 are arranged in a row, the first LED 1 and the second LED 2 are arranged so that their optical axes are orthogonal to each other. In this way, light-guiding units such as the triangular prism 9 shown in Fig. 1 are not required. Accordingly, the structure of the illumination apparatus 100 can be simplified.

### Second Modification

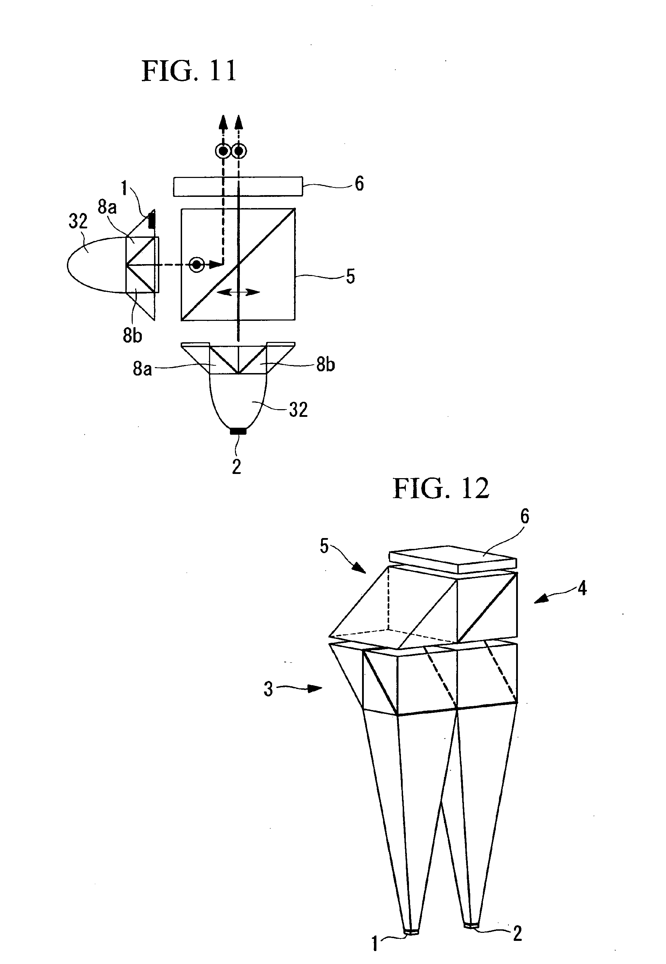

Fig. 11 illustrates a second modification of the illumination apparatus 100.

In the second modification, instead of the tapered rods 7 shown in Fig. 1, compound parabolic concentrators (CPCs) 32 are employed. The degree of collimation of the light from the first LED 1 and the second LED 2 can be increased also by using such CPCs 32. Furthermore, according to this modification, by disposing two polarization beam splitters 8a and 8b at the emission side of each of the CPCs 32, light emitted from the LEDs 1 and 2 can be guided in four optical paths. More specifically, the polarization beam splitters 8a and 8b are disposed at a 45-degree angle to the optical axes of the first LED 1 and the second LED 2 and are disposed such that the surfaces of the polarization splitting films intersect at a right angle. Light reflected at the polarization beam splitters 8a and 8b is incident on the triangular prism and is guided to the light-combining unit 5 via an optical path parallel to the transmitted light. In this way, by using a plurality of polarization beam splitters 8a and 8b, light from the LEDs 1 and 2 may be guided via two or more optical paths and then guided to the light-combining unit 5. The number of polarization beam splitters 8a and 8b to be provided is not limited to two; three or more may be provided.

### Third Modification

Fig. 12 illustrates a third modification of the illumination apparatus 100.

In the third modification, the polarization converter units 3 and 4 in the illumination apparatus 100 shown in Fig. 1 are rotated around the optical axis by 90 degrees. With such an arrangement, the width can be reduced, and the area size of the apparatus can be reduced.

### Second Embodiment

Next, an illumination apparatus 100 according to a second embodiment of the present invention will be described.

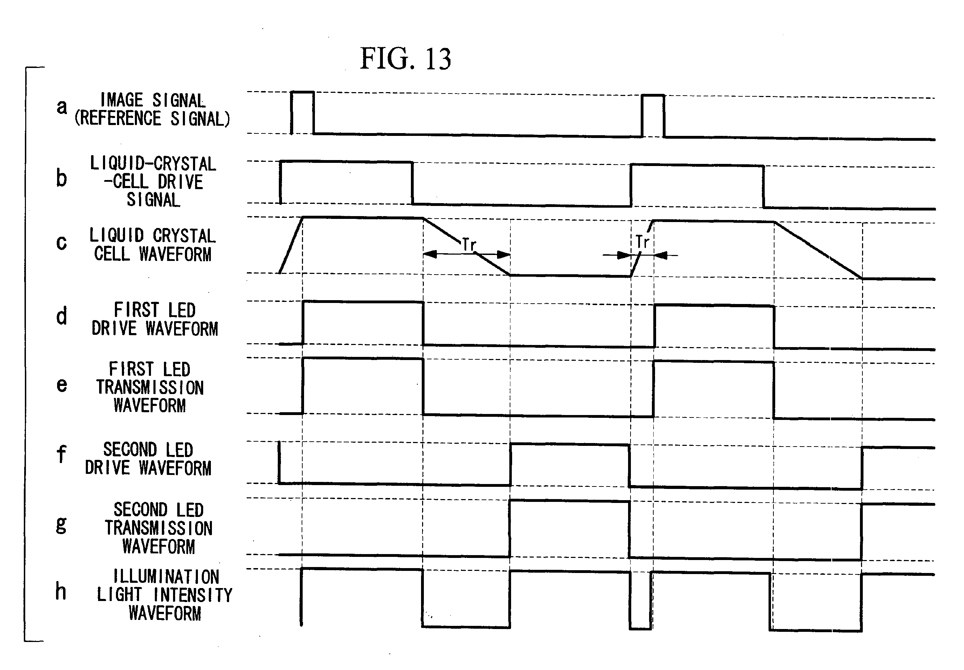

In the above-described first embodiment, the first and second LEDs 1 and 2 are both illuminated during the transition period Tr of the liquid crystal cell 6. In this embodiment, however, as shown in Fig. 13, the first and second LEDs 1 and 2 are both turned off during the transition period Tr of the liquid crystal cell 6.

As described above, during the transition period Tr of the liquid crystal cell 6, both an S-polarized component and a P-polarized component are included in the light transmitted through the liquid crystal cell 6 because both polarization states exist during the transition period Tr of the liquid crystal cell 6. Therefore, when a polarizing modulator, such as an LCD panel or a LCOS panel, is disposed downstream of the liquid crystal cell 6, part of the light will not be used, causing a decrease in the light utilization ratio.

Therefore, according to this embodiment, both the first LED 1 and the second LED 2 are turned off (refer to Figs. 13d and 13f) during the transition period Tr to prevent the LEDs from being illuminated during a period of time in which the light utilization ratio is low. In this case, since neither the first LED 1 nor the second LED 2 is illuminated during the transition period Tr, illumination light is not outputted from the illumination apparatus 100, as shown in Fig. 13h. However, since the transition period Tr is an extremely short period of time, the observer does not notice. Since the illumination light outputted from the illumination apparatus 100 according to this embodiment flashes with an extremely short period, it is preferable to use the illumination apparatus 100 in a device with a relatively slow response, such as a liquid crystal display.

As described above, in the illumination apparatus 100 according to this embodiment, since both the LEDs 1 and 2 are turned off during the transition period Tr in which the polarization state of the illumination light outputted from the liquid crystal cell 6 is not stable, the LEDs 1 and 2 can be prevented from being turned off during a period of time in which the light utilization ratio is low. In this way, the light utilization ratio can be improved, and electrical power consumption can be reduced.

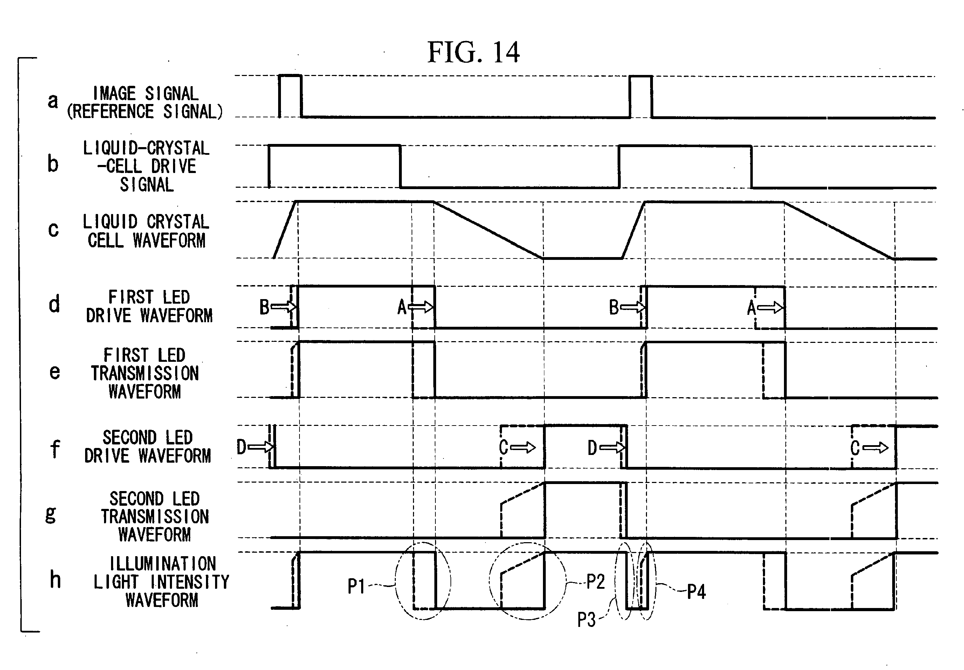

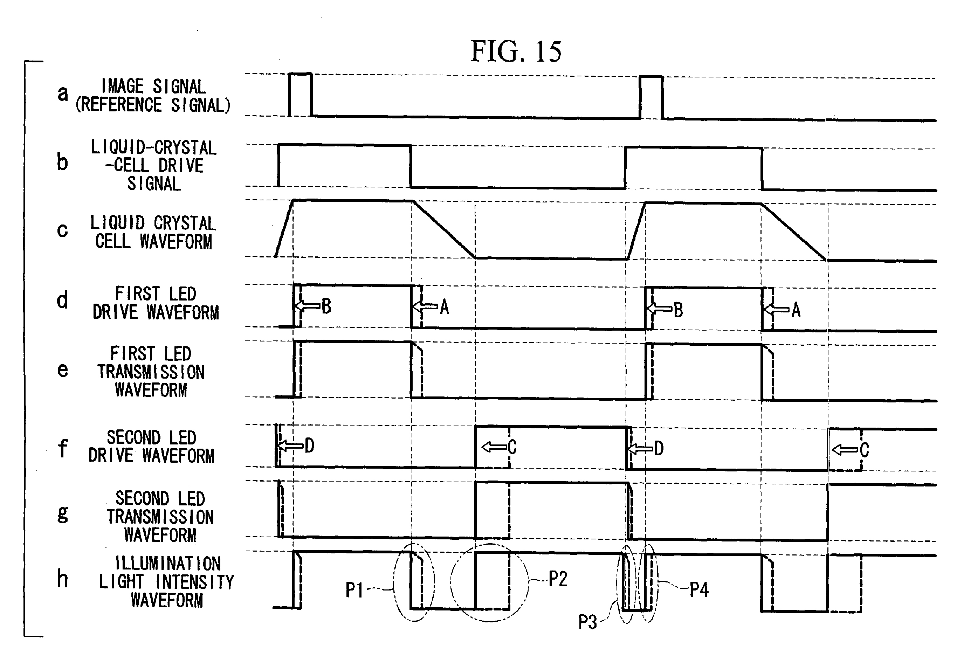

In this embodiment, similar to the above-described first embodiment, the illumination and extinction timings of the first LED 1 and the second LED 2 can be adjusted on the basis of the illumination-light intensity waveform detected by the light-intensity sensor 22. The adjustment process carried out by the system control unit 25 will be described below with reference to Figs. 14 and 15.

When the ambient temperature is lower than a reference temperature and the transition of the liquid crystal cell 6 is later than a reference time, the system control unit 25 delays the extinction timing of the first LED 1 (refer to arrow A in Fig. 14d) to a point where the illumination-light waveform corresponding to the first LED 1 (refer to a region P1 in Fig. 14h) when the liquid-crystal-cell drive signal is changed from the ON state to the OFF state can be maintained as a rectangular waveform without forming a trapezoidal waveform and delays the illumination timing of the second LED 2 (refer to arrow C in Fig. 14f) to a point where the illumination-light intensity waveform corresponding to the second LED 2 (refer to the region P2 in Fig. 14h) changes from a trapezoidal waveform to a rectangular waveform.

Moreover, the system control unit 25 delays the extinction timing of the second LED 2 to a point where the illumination-light intensity waveform corresponding to the second LED 2 when the liquid-crystal-celldrive signal is changed from the OFF state to the ON state (refer to a region P3 in Fig. 14h) can be maintained as a rectangular waveform without forming a trapezoidal waveform (refer to arrow D in Fig. 14f). At the same time, the system control unit 25 delays the illumination timing of the first LED 1 to a point where the illumination-light intensity waveform (refer to a region P4 in Fig. 14h) corresponding to the first LED 1 changes from a trapezoidal waveform to a rectangular waveform (refer to arrow B in Fig. 14d).

In contrast, when the ambient temperature is higher than a reference temperature and the transition of the liquid crystal cell 6 is earlier than a reference time, the system control unit 25 advances the extinction timing of the first LED 1 to a point where the illumination-light intensity waveform corresponding to the first LED 1 when the liquid-crystal-cell drive signal is changed from the ON state to the OFF state (refer to a region P1 in Fig. 15h) changes from a trapezoidal waveform to a rectangular waveform (refer to arrow A in Fig. 15d) and advances the illumination timing of the second LED 2 to a point where the illumination-light intensity waveform corresponding to the second LED 2 (refer to a region P2 in Fig. 15h) can be maintained as a rectangular waveform without forming a trapezoidal waveform (refer to arrow C in Fig. 15f).

Furthermore, the system control unit 25 advances the extinction timing of the second LED 2 to a point where the illumination-light intensity waveform corresponding to the second LED 2 when the liquid-crystal-cell drive signal is changed from the OFF state to the ON state (refer to the region P3 in Fig. 15h) can be maintained as a rectangular waveform without forming a trapezoidal waveform (refer to arrow D in Fig. 15f) and advances the illumination timing of the first LED 1 to a point where the illumination-light intensity waveform corresponding to the first LED 1 (refer to a region P4 in Fig. 15h) can be maintained as a rectangular waveform without forming a trapezoidal waveform (refer to arrow B in Fig. 15d).

By carrying out such adjustment, the light utilization ratio can be prevented from being reduced due to individual differences and temperature characteristics.

### Third Embodiment

Next, an illumination apparatus 100 according to a third embodiment will be described.

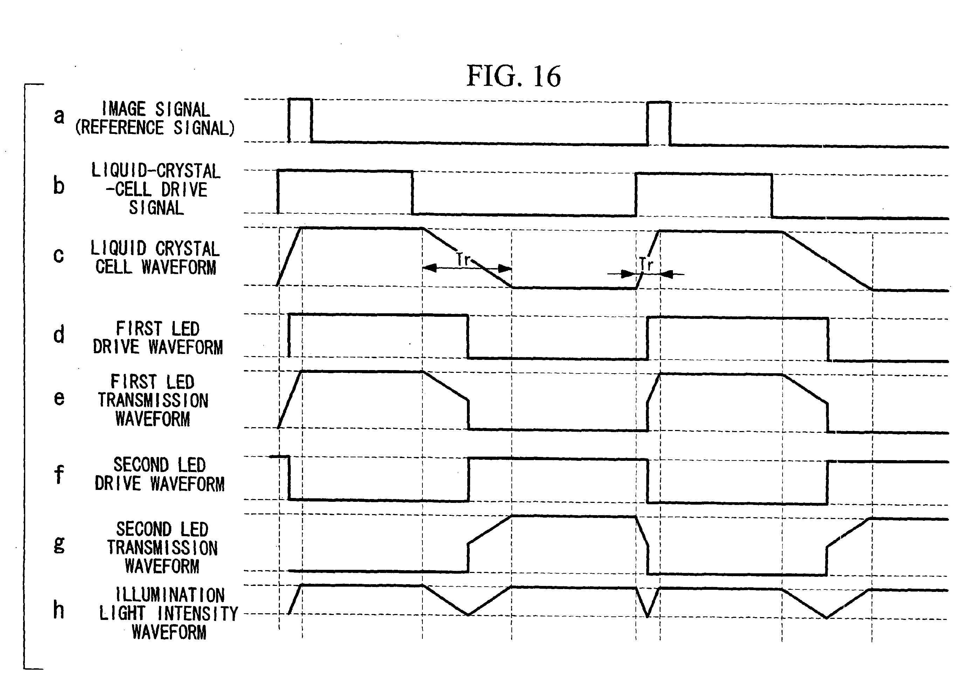

In the above-described first embodiment, the LEDs 1 and 2 are both illuminated during the transition period Tr of the liquid crystal cell 6. In this embodiment, however, as shown in Fig. 16, the illumination of the LEDs 1 and 2 is switched during the transition period Tr of the liquid crystal cell 6, preferably near an intermediate point.

By switching between illumination and extinction of the LEDs near the intermediate point of the transition period Tr of the liquid crystal cell 6, a change in the intensity of the illumination light of the illumination apparatus 100 can be reduced. In other words, in the transition period Tr when the liquid crystal cell 6 is switched from the ON state to the OFF state, the amount of transmitted S-polarized light gradually increases and the amount of transmitted P-polarized light gradually decreases. Similarly, in the transition period Tr when the liquid crystal cell 6 switches from the OFF state to the ON state, the amount of transmitted S-polarized light gradually decreases and the amount of transmitted P-polarized light gradually increases. Therefore, in either transition period Tr, by switching the illumination of the first LED 1 and the second LED 2 at substantially the intermediate point of the transition period Tr, i.e., at a time where the amounts of transmitted S-polarized light and the transmitted P-polarized light are substantially the same, the decrease in the intensity of light output from the illumination apparatus 100 during the transition period Tr can be reduced, as shown in Fig. 16h.

As described above, in the illumination apparatus 100 according to this embodiment, since the illumination of the LEDs 1 and 2 are switched at substantially the intermediate point in the transition period Tr of the liquid crystal cell 6, the first LED 1 and the second LED 2 are not illuminated together during any point in the transition period Tr. Therefore, compared with the illumination apparatus 100 according to the first embodiment, in which both the first LED 1 and the second LED 2 are illuminated during the transition period Tr, electrical power consumption of the illumination apparatus 100 can be reduced. Furthermore, compared with the illumination apparatus 100 according to the second embodiment, in which both the first LED 1 and the second LED 2 are turned off during the transition period Tr, a change in the intensity of the illumination light of the illumination apparatus 100 can be reduced.

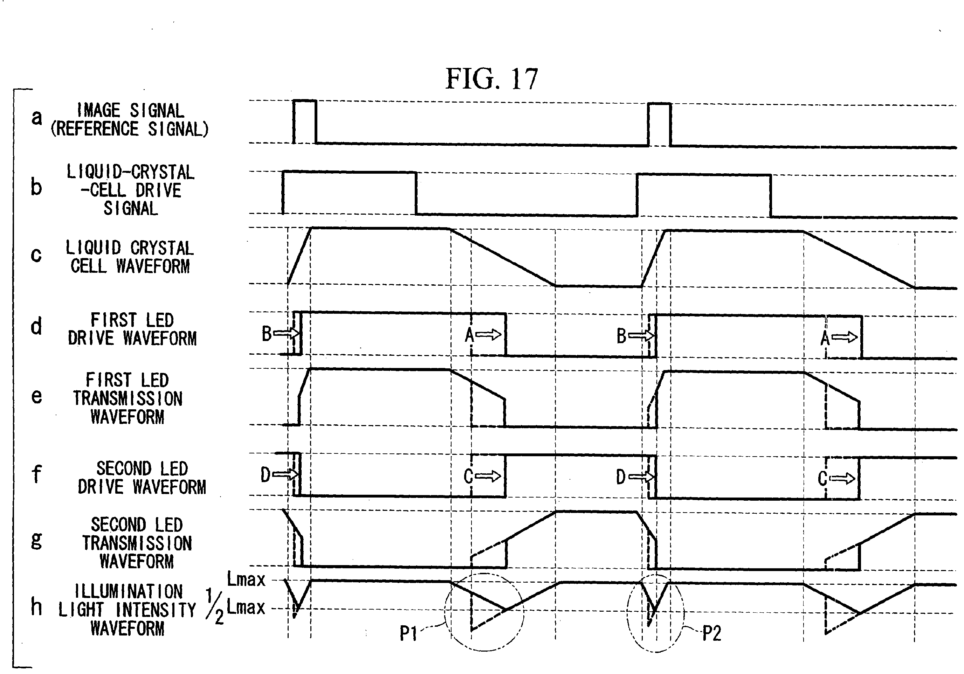

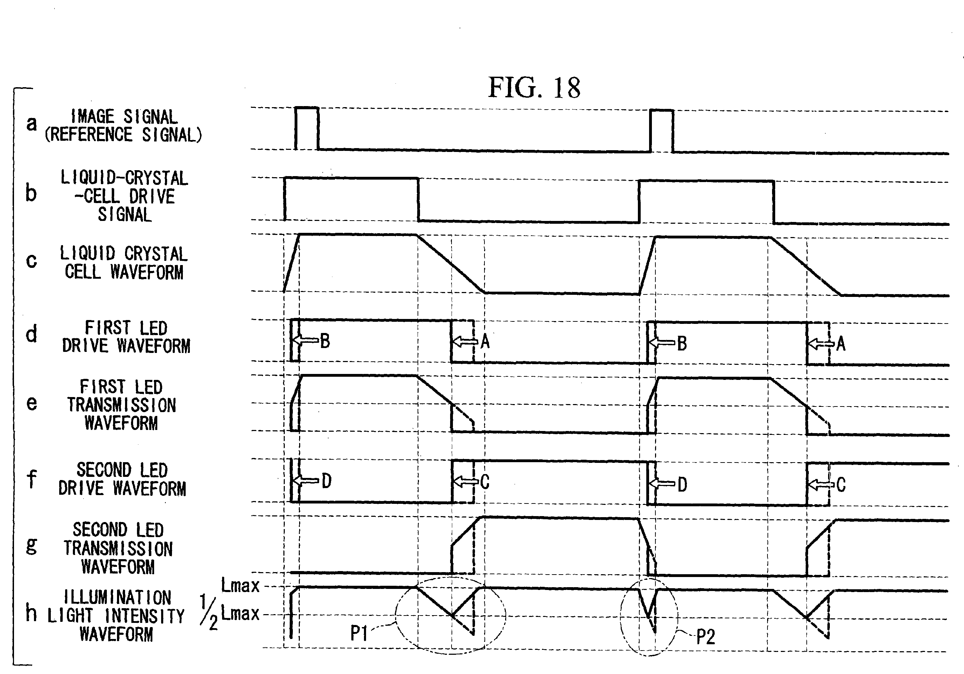

In this embodiment, similar to the above-described first embodiment, the illumination and extinction timings of the first LED 1 and the second LED 2 may be adjusted on the basis of the illumination-light intensity waveform detected by the light-intensity sensor 22. The adjustment process carried out by the system control unit 25 will be described below with reference to Figs. 17 and 18.

When the ambient temperature is lower than a reference value and the transition of the liquid crystal cell 6 is later than a reference time, the system control unit 25 delays the extinction timing of the first LED 1 until the minimum value Lmin of the illumination-light intensity waveform when the liquid-crystal-cell drive signal is switched from the ON state to the OFF state (refer to a region P1 in Fig. 17h) reaches 50% or more of the maximum light intensity Lmax (refer to arrow A in Fig. 17d) and matches the extinction timing with the illumination timing of the second LED 2 (refer to arrow C in Fig. 17f).

Moreover, the system control unit 25 delays the illumination timing of the first LED 1 until the minimum value Lmin of the illumination-light intensity waveform when the liquid-crystal-cell drive signal is switched from the OFF state to the ON state (refer to a region P2 in Fig. 17h) reaches 50% or more of the maximum light intensity Lmax (refer to arrow B in Fig. 17d) and matches the illumination timing with the extinction timing of the second LED 2 (refer to arrow D in Fig. 17f).

When the transition of the liquid crystal cell 6 is earlier than a reference time due to, for example the ambient temperature being higher than a reference value, the system control unit 25 carries out the process described below so as to adjust the illumination and extinction timings of the LEDs.

The system control unit 25 advances the extinction timing of the first LED 1 until the minimum value Lmin of the illumination-light intensity waveform when the liquid-crystal-cell drive signal is switched from the ON state to the OFF state (refer to a region P1 in Fig. 18h) reaches 50% or more of the maximum light intensity Lmax (refer to arrow A in Fig. 18d) and matches the extinction timing with the illumination timing of the second LED 2 (refer to arrow C in Fig. 18f).

The system control unit 25 advances the illumination timing of the first LED 1 until the minimum value Lmin of the illumination-light intensity waveform when the liquid-crystal-cell drive signal is switched from the OFF state to the ON state (refer to a region P2 in Fig. 18h) reaches 50% or more of the maximum light intensity Lmax (refer to arrow B in Fig. 18d) and matches the illumination timing with the extinction timing of the second LED 2 (refer to arrow D in Fig. 18f).

By adjusting the illumination and extinction timings of the LEDs 1 and 2 in accordance with the illumination-light intensity waveforms detected by the light-intensity sensor 22, changes in the intensity of the illumination light caused by individual differences and temperature characteristics can be prevented.

### Fourth Embodiment

Next, an illumination apparatus 100 according to a fourth embodiment of the present invention will be described below.

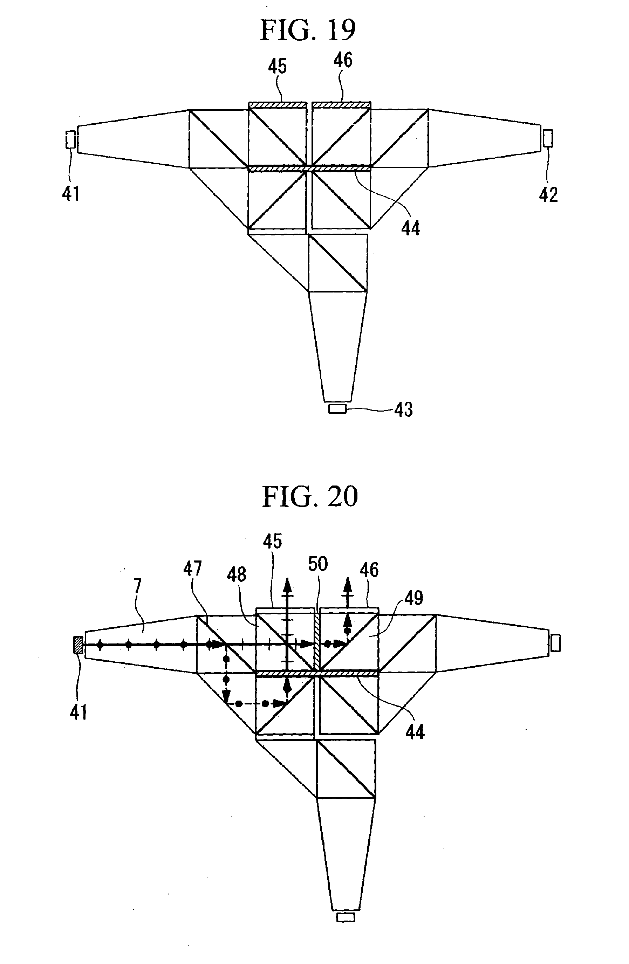

As shown in Fig. 19, the illumination apparatus 100 according to this embodiment includes three LEDs: a first LED 41, a second LED 42, and a third LED 43. By switching the illumination of the LEDs 41, 42, and 43, it is possible to obtain a brighter illumination light than that when two LEDs 1 and 2 are provided.

Among the three LEDs 41, 42, and 43, the first LED 41 and the second LED 42 are disposed at positions opposing each other. The third LED 43 is disposed at a position where its optical axis orthogonally intersects with the optical axes of the other two LEDs 41 and 42. The illumination apparatus 100 according to this embodiment includes three liquid crystal cells: a first liquid crystal cell 44, a second liquid crystal cell 45, and a third liquid crystal cell 46. The second liquid crystal cell 45 and the third liquid crystal cell 46 are aligned on the output-side surface of the illumination apparatus 100. Light emitted from the LEDs 41, 42, and 43 is incident on a predetermined illumination region via the second liquid crystal cell 45 or the third liquid crystal cell 46. The other liquid crystal cell, i.e., the first liquid crystal cell 44, is provided upstream of the liquid crystal cells 45 and 46 aligned on the output-side surface. The first liquid crystal cell 44 is driven in synchronization with the LEDs 41, 42, and 43 so as to polarize the incident light in a predetermined direction and output polarized light.

In an illumination apparatus 100 having this structure, the first LED 41, the second LED 42, the third LED 43, the first liquid crystal cell 44, the second liquid crystal cell 45, and the third liquid crystal cell 46 are controlled in synchronization with a system control unit (not shown). In this case, the first LED 41, the second LED 42, and the third LED 43 are illuminated alternately in order.

As shown in Fig. 20, when the first LED 41 is illuminated, the illumination light from the first LED 41 is more highly collimated by the tapered rod 7 and is split into S-polarized light and P-polarized light by a first polarization beam splitter 47. The P-polarized light is transmitted through a fifth polarization beam splitter 48, which is disposed at a 45-degree angle to the optical axis. Then, the polarization direction of the P-polarized light is rotated by 90 degrees at a half-wave plate 50 provided upstream in the optical path so as to generate S-polarized light. The S-polarized light is reflected at a sixth polarization beam splitter 49 disposed at a 45-degree angle to the optical axis and is guided to the third liquid crystal cell 46.

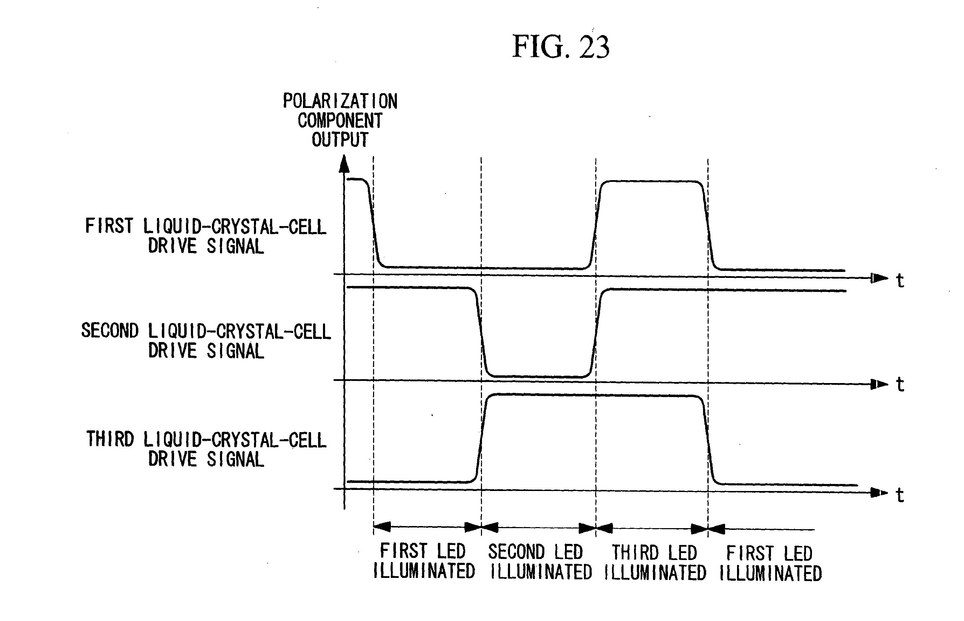

The optical path of the S-polarized light reflected at the first polarization beam splitter 47 is changed by a triangular prism and so on so that the optical path orthogonally intersects with the optical axis of the P-polarized light. Then, the S-polarized light is guided to the first liquid crystal cell 44 disposed in the new optical path. In this case, as shown in Fig. 23, since the first liquid crystal cell 44 is in an OFF state, the S-polarized light incident on the first liquid crystal cell 44 is converted into P-polarized light. The P-polarized light is transmitted through the fifth polarization beam splitter 48 disposed at a 45-degree angle to the optical axis and is guided to the second liquid crystal cell 45 disposed on the emission-side surface.

In this case, as shown in Fig. 23, since the second liquid crystal cell 45 is in an ON state and the third liquid crystal cell 46 is in an OFF state, the P-polarized light incident on the second liquid crystal cell 45 is outputted from the second liquid crystal cell 45 without being converted; and the S-polarized light incident on the third liquid crystal cell 46 is converted into P-polarized light by rotating its polarization direction by 90 degrees and is outputted from the third liquid crystal cell 46. In this way, illumination light that is uniformly converted into P-polarized light is outputted from the illumination apparatus 100.

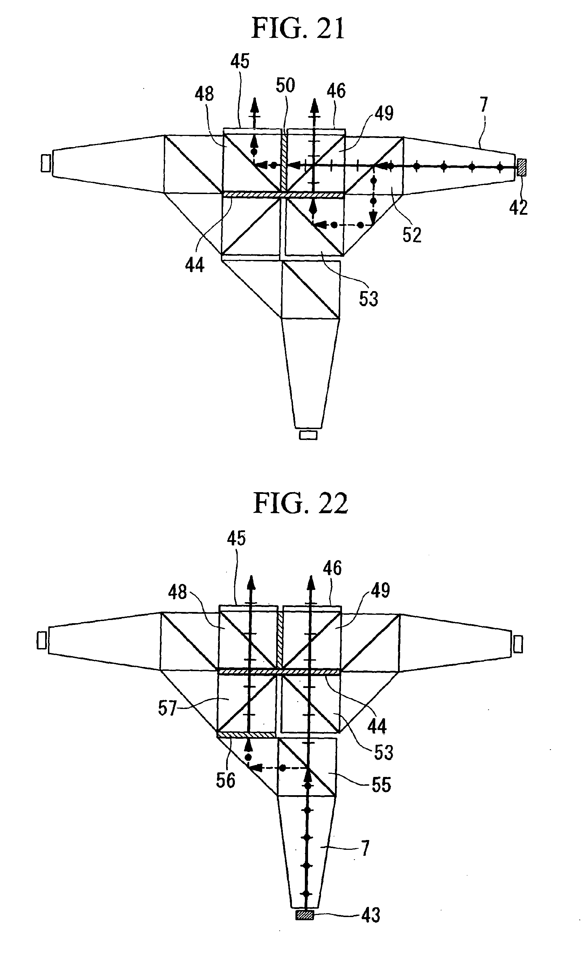

Subsequently, as shown in Fig. 21, when the second LED 42 is illuminated, the illumination light from the second LED 42 is more highly collimated by the tapered rod 7 and is split into S-polarized light and P-polarized light at a second polarization beam splitter 52. After being split off, the P-polarized light is transmitted through the sixth polarization beam splitter 49 disposed at a 45-degree angle to the optical axis. Then, the polarization direction of the P-polarized light is rotated by 90 degrees at the half-wave plate 50 provided upstream in the optical path so as to generate S-polarized light. The S-polarized light is reflected at the fifth polarization beam splitter 48 disposed at a 45-degree angle to the optical axis and is guided to the second liquid crystal cell 45.

The optical path of the S-polarized light reflected at the second polarization beam splitter 52 is changed by the triangular prism, a seventh beam splitter 53, and so on such that it orthogonally intersects with the optical axis of the split-off P-polarized light. Then, the S-polarized light is guided to the first liquid crystal cell 44 disposed in the new optical path.

In this case, as shown in Fig. 23, since the first liquid crystal cell 44 is in an OFF state, the S-polarized light incident on the first liquid crystal cell 44 is converted into P-polarized light. Then, the P-polarized light is transmitted through the sixth polarization beam splitter 49 disposed at a 45-degree angle to the optical axis and is guided to the third liquid crystal cell 46 disposed on the emission-side surface of the third liquid crystal cell 46.

In this case, as shown in Fig. 23, since the second liquid crystal cell 45 is in an OFF state and the third liquid crystal cell 46 is in an ON state, the S-polarized light incident on the second liquid crystal cell 45 is converted into P-polarized light by rotating its polarization direction by 90 degrees and is outputted from the second liquid crystal cell 45, and the P-polarized light incident on the third liquid crystal cell 46 is outputted from the third liquid crystal cell 46 without being converted. In this way, illumination light that is uniformly converted into P-polarized light is outputted from the illumination apparatus 100.

Subsequently, as shown in Fig. 22, when the third LED 43 is illuminated, the illumination light from the third LED 43 is more highly collimated by the tapered rod 7 and is split into S-polarized light and P-polarized light at a third polarization beam splitter 55. After being split off, the P-polarized light is transmitted through the seventh beam splitter 53 disposed at a 45-degree angle to the optical axis and is guided to the first liquid crystal cell 44. The optical path of the S-polarized light reflected at the third polarization beam splitter 55 is changed by the triangular prism and such that it is parallel to the split-off P-polarized light. The S-polarized light is converted into P-polarized light by passing through a half-wave plate 56 disposed in the new optical path. The obtained P-polarized light is transmitted through an eighth polarization beam splitter 57 disposed at a 45-degree angle to the optical axis and is guided to the first liquid crystal cell 44. In this case, as shown in Fig. 23, since the first liquid crystal cell 44 is in an ON state, the P-polarized light beams incident on the first liquid crystal cell 44 from different optical paths are transmitted through the polarization beam splitters 48 and 49 without being converted, i.e., as P-polarized light beams, and are guided to the second liquid crystal cell 45 and the third liquid crystal cell 46, respectively.

In this case, as shown in Fig. 23, since both the second liquid crystal cell 45 and the third liquid crystal cell 46 are in ON states, the P-polarized light beams incident on the second liquid crystal cell 45 and the third liquid crystal cell 46 are outputted from the second liquid crystal cell 45 and the third liquid crystal cell 46, respectively, without being converted, i.e., as P-polarized light. In this way, illumination light uniformly converted into P-polarized light is outputted from the illumination apparatus 100. By combining the different states of the first liquid crystal cell 44, the second liquid crystal cell 45, and the third liquid crystal cell 46, illumination light polarized in a desired direction can be outputted.

In this embodiment, an illumination apparatus 100 including three LEDs is described. However, the number of LEDs to be included in the illumination apparatus 100 according to embodiments of present invention is not limited. Furthermore, instead of LEDs, a solid-state light-emitting light source, such as laser, may be used.

### First Application Example

Next, a first application example of the above-described illumination apparatus 100 will be described.

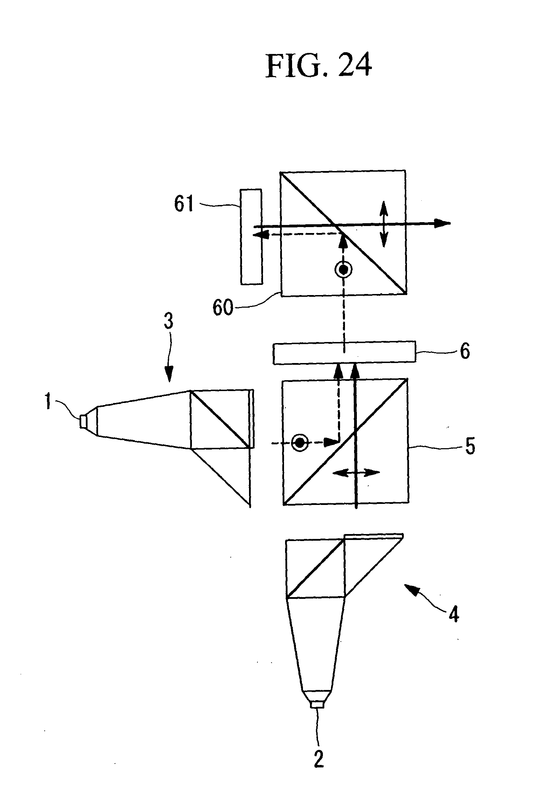

Fig. 24 illustrates a first application example of the above-described illumination apparatus 100.

As shown in Fig. 24, a first LED 1 and a second LED 2 of the illumination apparatus 100 according to this application example are not aligned but are positioned such that the optical axes of the LEDs 1 and 2 orthogonally intersect each other. The first LED 1 and the second LED 2 emit light having different wavelengths. The illumination apparatus 100 having this structure alternately outputs illumination light beams having different wavelengths by alternately illuminating the first LED 1 and the second LED 2. Illumination light having a stable intensity that is outputted from the illumination apparatus 100 is reflected at a polarization beam splitter 60 disposed forward in the optical path and is guided to a light modulator 61 disposed forward in the reflected light path. Here, since a reflective liquid crystal panel (LCOS) is used as the light modulator 61, the illumination light is modulated at the same time as it is reflected at the reflective liquid crystal panel and returns to the polarization beam splitter 60. The modulated illumination light is transmitted through the polarization beam splitter 60 and is incident on a predetermined display area so as to display a predetermined image on the display area.

In the illumination apparatus 100 according to this application example, a broadband polarization beam splitter should be used to combine the two light beams that are emitted from the first LED 1 and the second LED 2 and that have different wavelengths. Moreover, a reflective liquid crystal panel having a fast response speed supports multiple colors (a plurality of different wavelengths) with a single panel by using a time-division field sequential approach.

### Second Application Example

Next, a second application example of the illumination apparatus 100 described above will be described.

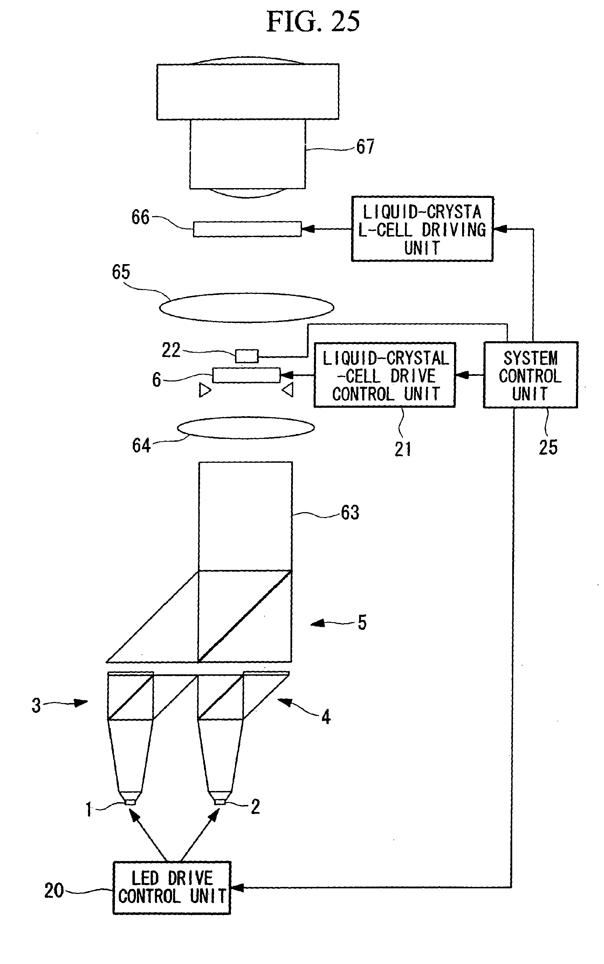

Fig. 25 illustrates the structure of an image projector employing an illumination apparatus 100 according to one of the above-described embodiments. In this case, the illumination apparatus 100 is provided with a mixing rod 63 interposed between a liquid crystal cell 6 and a light-combining unit 5 so as to combined light beams. Relay lenses 64 and 65 for relay-projecting light outputted from the mixing rod 63 are disposed such that the liquid crystal cell 6 is interposed therebetween. The liquid crystal cell 6 is disposed near the aperture stop of the relay lenses 64 and 65.

The illumination light outputted from the illumination apparatus 100 is incident on a liquid crystal panel 66 that functions as a light modulator (light modulating unit) via the relay lenses 64 and 65. The illumination light optically modulated by the liquid crystal panel 66 for each pixel on the basis of image data is projected onto a predetermined illumination area via a projection lens 67.

In this case, the liquid crystal panel 66, the liquid crystal cell 6, the first LED 1, and the second LED 2 are synchronously controlled in by a system control unit 25. Therefore, these units can be driven at optical timing so as to prevent, for example, beat noise, caused by a shift in period, from being superimposed on an output image.

In the image projector according to this application example, the liquid crystal cell 6 is disposed near the aperture stop of the relay lenses 64 and 65. Accordingly, the polarization direction can be changed by the liquid crystal cell 6 without disrupting the uniformity of the illumination distribution.

The above-described image projector is a monochrome projector optical system. When it is a color projector optical system, the image projector should include, for each color, units up to the mixing rod 63, such as the first LED 1, the second LED 2, and the tapered rods and polarization beam splitters corresponding to the LEDs 1 and 2, and should include a dichroic filter (not shown) for color-combining the optical paths. In addition, a color image should be projected by field-sequentially driving the liquid crystal panel 66, which is the modulator, and outputting different colors of light from the LEDs in synchronization with the field-sequential driving.

### Fifth Embodiment

Next, an illumination apparatus 100 according to a fifth embodiment will be described.

Descriptions of components that are the same as those of the first embodiment are not repeated, and differences will be mainly described.

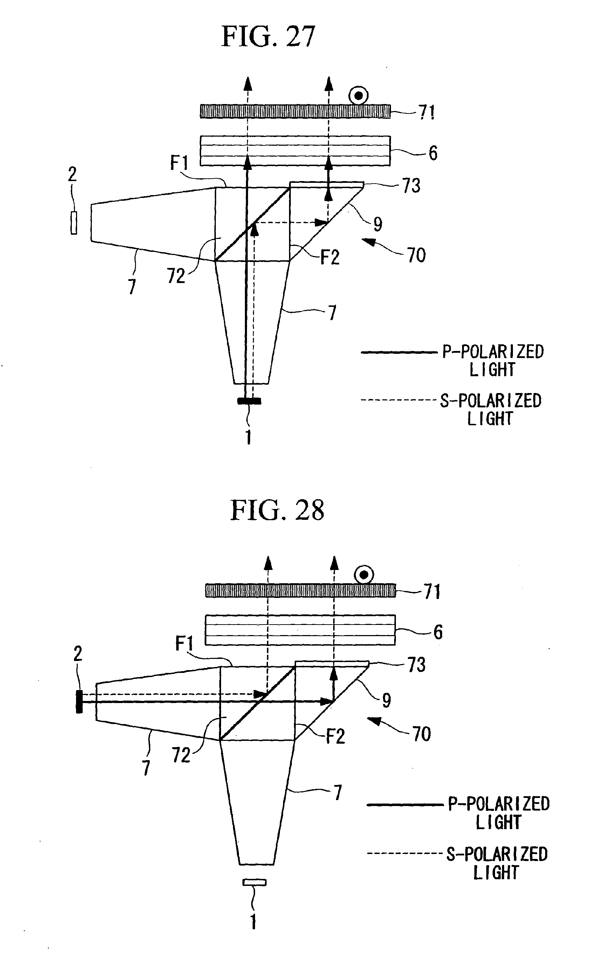

Fig. 26 illustrates the overall configuration of the illumination apparatus 100 according to the fifth embodiment. Figs. 27 and 28 illustrate the polarization states of the illumination apparatus 100 shown in Fig. 26.

As shown in Fig. 26, the illumination apparatus 100 according to this embodiment includes a first LED 1, a second LED 2, a polarization converter unit 70 that converts the polarization direction of illumination light emitted from the first LED 1 into a first polarization direction and converts the polarization direction of illumination light emitted from the second LED 2 into a second polarization direction orthogonal to the first polarization direction, a liquid crystal cell 6 that receives the illumination light outputted from the polarization converter unit 70, and a control device 74 that intermittently controls the first LED 1 and the second LED 2 and controls the liquid crystal cell 6, the first LED 1, and the second LED 2 in synchronization so as to substantially continuously output illumination light from the liquid crystal cell 6. A polarizing plate 71 is provided on the output surface side of the liquid crystal cell 6.

The polarization converter unit 70 includes a polarization beam splitter 72 that receives, through different incident surfaces, first illumination light emitted from the first LED 1 and second illumination light emitted from the second LED 2, splits the first illumination light and the second illumination light into P-polarized light and S-polarized light, outputs the P-polarized light from the first illumination light and the S-polarized light from the second illumination light from a first output surface F1, and outputs the S-polarized light from the first illumination light and the P-polarized light from the second illumination light from a second output surface F2. It also includes a half-wave plate (polarizing unit) 73 that rotates the polarization direction of the illumination light outputted from the second output surface F2 of the polarization beam splitter 72 by 90 degrees.

Tapered light-guiding rods 7 (hereinafter referred to as "tapered rods 7") are interposed between the first LED 1 and the polarization beam splitter 72 and between the second LED 2 and the polarization beam splitter 72.

The control device 74 includes an LED drive control unit 20 that drives the first LED 1 and the second LED 2, a liquid-crystal drive control unit 21 that drives the liquid crystal cell 6, and a system control unit 25 that controls, in synchronization, the liquid-crystal drive control unit 21 and the LED drive control unit 20 on the basis of the detection result of a light-intensity sensor 22 so as to maintain the illumination light outputted from the liquid crystal cell 6 at a substantially constant intensity.

The light-intensity sensor 22, which is provided on the emission side of the liquid crystal cell 6, detects the intensity of illumination light and outputs the detected result to the system control unit 25. When the illumination apparatus 100 is used as a light source for an image projector, the light-intensity sensor 22 may be mounted near the aperture of a projection lens (not shown) or near a light modulator, such as a liquid crystal panel for displaying an image. In some cases, the light-intensity sensor 22 may even be mounted on a modulating device. In this case, to prevent the light-intensity sensor 22 from causing a shadow, the light-intensity sensor 22 may receive light only at start-up or after a predetermined amount of time elapses and may be stored somewhere else when not receiving light.

In the illumination apparatus 100 having this structure, the system control unit 25 outputs a drive control command to the liquid-crystal drive control unit 21 so as to alternately switch the liquid crystal cell 6 between an ON state and an OFF state and outputs an illumination control command to the LED drive control unit 20 so as to alternately illuminate the first LED 1 and the second LED 2 in synchronization with the drive control command.

More specifically, the system control unit 25 controls the LED drive control unit 20 and the liquid-crystal drive control unit 21 so as to illuminate the first LED 1 when the liquid crystal cell 6 is in the OFF state and to illuminate the second LED 2 when the liquid crystal cell 6 is in the ON state. Any one of the above-described control methods according to the embodiments may be employed as the illumination control of the first LED 1 and the second LED 2 during a transition period Tr when liquid crystal cell 6 changes state.

As shown in Fig. 27, during the illumination period of the first LED 1, the first illumination light emitted from the first LED 1 is more highly collimated by the tapered rod 7 and is guided to the polarization beam splitter 72. At the polarization beam splitter 72, the first illumination light is split into P-polarized light and S-polarized light; the P-polarized light is outputted from the first output surface F1; and the S-polarized light is outputted from the second output surface F2. The optical path of the S-polarized light is changed by 90 degrees at a triangular prism 9 so that the S-polarized light becomes parallel to the P-polarized light. Then, the polarization direction of the S-polarized light is rotated by 90 degrees at the half-wave plate 73 and is converted into P-polarized light. The reflective surface of the triangular prism 9 may be uncoated (i.e., bare glass) and using glass with a large index of refraction, or it may be mirror-coated. In this way, the S-polarized light can be reflected and guided to the half-wave plate 73.

In this way, the first illumination light converted into P-polarized light by the polarization converter unit 70 is guided to the liquid crystal cell 6. Since the liquid crystal cell 6 is in the OFF state, the P-polarized light is converted into S-polarized light and is outputted. The first illumination light converted into S-polarized light is transmitted through the polarizing plate 71 in the S-polarization direction, and the polarization direction of the first illumination light is aligned even more before the first illumination light is guided to a spatial light modulator (not shown) provided downstream.

As shown in Fig. 28, during the illumination period of the second LED 2, the second illumination light emitted from the second LED 2 is more highly collimated by the tapered rod 7 and is guided to the polarization beam splitter 72. At the polarization beam splitter 72, the second illumination light is split into P-polarized light and S-polarized light; the P-polarized light is outputted from the first output surface F1; and the S-polarized light is outputted from the second output surface F2. The optical path of the P-polarized light is changed by 90 degrees at the triangular prism 9 so that the P-polarized light becomes parallel to the S-polarized light. Then, the polarization direction of the P-polarized light is rotated by 90 degrees at the half-wave plate 73 and is converted into S-polarized light.

In this way, the second illumination light converted into S-polarized light by the polarization converter unit 70 is guided to the liquid crystal cell 6. Since the liquid crystal cell 6 is in an ON state, the S-polarized light is outputted without its polarization direction being changed. The second illumination light, which is S-polarized light, is transmitted through the polarizing plate 71 in the S-polarization direction, and the polarization direction of the first illumination light is aligned even more before the first illumination light is guided to the spatial light modulator (not shown) provided downstream.

As described above, in the illumination apparatus 100 according to the fifth embodiment, the system control unit 25 intermittently drives the first LED 1 and the second LED 2 so as to alternately illuminate the first LED 1 and the second LED 2 in this order. In this way, an electrical current greater than a rated current can be applied to the first LED 1 and the second LED 2, increasing the brightness of the illumination light. Since the first LED 1, the second LED 2, and the liquid crystal cell 6 are controlled in synchronization, bright illumination light polarized in a desired direction can be outputted.

Since the polarizing plate 71 of the S-polarization direction is provided on the output surface side of the liquid crystal cell 6, the polarization direction of the illumination light can be aligned. In this way, the light utilization ratio of modulating devices using polarization, such as an LCD or an LCOS, can be improved.

In this embodiment, the bonding surfaces of various optical elements, such as the tapered rod 7, the polarization beam splitter 72, and the triangular prism 9, are bonded together with an optical adhesive so as to form a single unit.

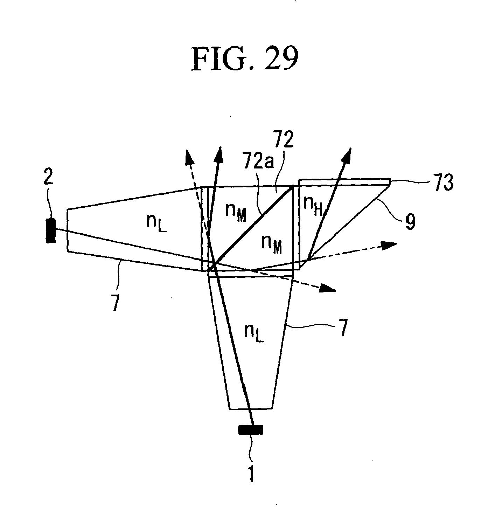

When the various optical elements are formed of glass having, for example, an index of refraction of approximately n=1.5, light leakage occurs in unwanted directions, as shown in Fig. 29 with dotted lines. Also, as shown in Fig. 29 with a double-dotted line, the second illumination light emitted from the second LED 2 leaks without being totally reflected at the inclined surface of the triangular prism 9. To prevent such light leakage, it is preferable to form the triangular prism 9 with glass having, for example, a large index of refraction of approximately n_{H}=1.8. In this way, the incident illumination light can be substantially totally reflected.

In general, since the index of refraction of the optical adhesive is approximately 1.5, light leakage, which is indicated by the dotted line in Fig. 29, can be prevented by forming the polarization beam splitter 72 with glass having an index of refraction of approximately n_{M}=1.6. However, if the index of refraction of the glass used for forming the polarization beam splitter 72 is too large, the difficulty designing a polarization splitting film 72a rises, and efficiency decreases. Therefore, to prevent such problems, it is preferable to form the tapered rod 7 with glass having an index of refraction of approximately n_{L}=1.5.

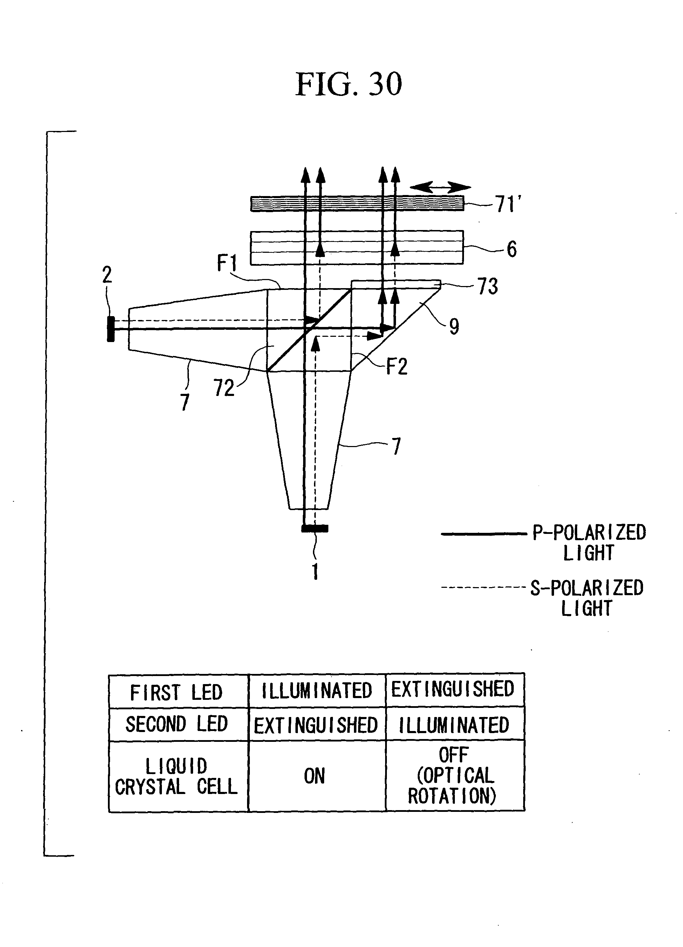

In this embodiment, the illumination light outputted from the illumination apparatus 100 is converted into S-polarized light. Instead, however, as shown in Fig. 30, the illumination light outputted from the illumination apparatus 100 may be converted into P-polarized light. In this case, the system control unit 25 controls the LED drive control unit 20 and the liquid-crystal drive control unit 21 so as to illuminate the first LED 1 when the liquid crystal cell 6 is in the ON state and illuminate the second LED 2 when the liquid crystal cell 6 is in the OFF state. Furthermore, a polarizing plate 71' in the P-polarization direction is provided on the output surface side of the liquid crystal cell 6.

### Sixth Embodiment

Next, an illumination apparatus according to a sixth embodiment of the present invention will be mainly described.

The illumination apparatus according to this embodiment differs from the illumination apparatus according to the fifth embodiment in that a two-electrode liquid crystal cell is used as a liquid crystal cell 6' and an integrator rod is provided on the output surface side of the liquid crystal cell 6'. Descriptions of components of the illumination apparatus according to this embodiment that are the same as those of the fifth embodiment will not be repeated, and differences will be mainly described.

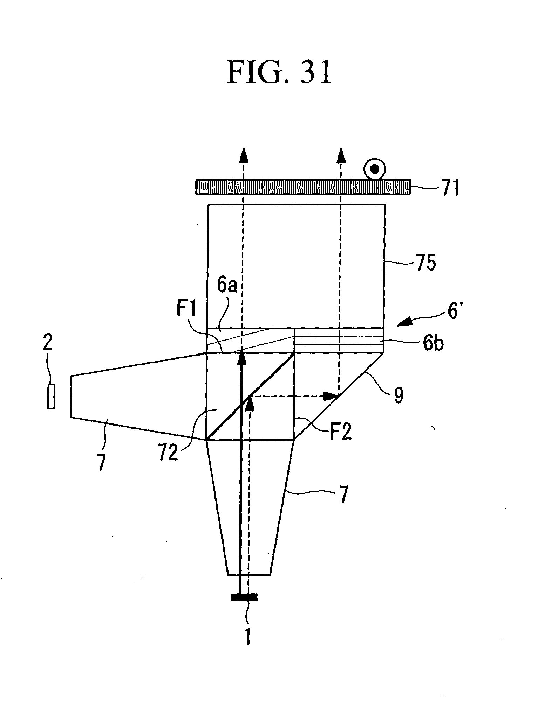

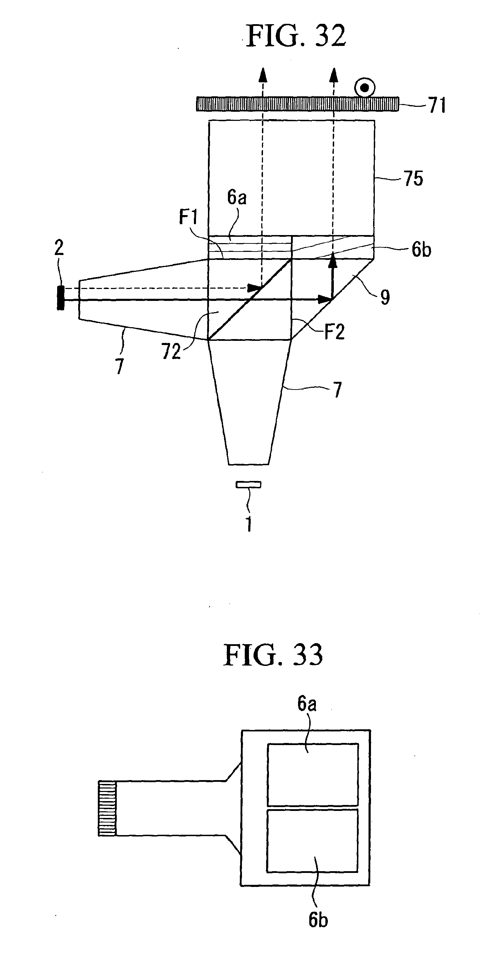

Figs. 31 and 32 illustrate the overall configuration of the illumination apparatus according to the sixth embodiment of the present invention. Fig. 31 illustrates the polarization states when a first LED 1 is illuminated. Fig. 32 illustrates the polarization states when a second LED 2 is illuminated.

In the illumination apparatus according to this embodiment, a two-electrode liquid crystal cell is used as the liquid crystal cell 6'. Fig. 33 illustrates, in outline, the two-electrode liquid crystal cell. As shown in Fig. 33, the two-electrode liquid crystal cell 6' includes a first electrode region (liquid crystal cell region) 6a and a second electrode region (liquid crystal cell region) 6b. These electrode regions can be driven independently.

In this embodiment, the first electrode region 6a is disposed in the optical path of illumination light outputted from a first output surface F1 of the polarization beam splitter 72 and the second electrode region 6b is disposed in the optical path of illumination light outputted from a second output surface F2 of the polarization beam splitter 72.

An integrator rod 75 is disposed on the output surface side of the liquid crystal cell 6'. The polarizing plate 71 in the S-polarization direction is disposed on the output surface side of the integrator rod 75.

In the illumination apparatus having this structure, a system control unit 25 outputs a drive control command to a liquid-crystal-cell drive control unit 21 so that the liquid crystal cell 6' alternates between an ON state and an OFF state and outputs an illumination control command to an LED drive control unit 20 so that a first LED 1 and a second LED 2 are alternately illuminated.

More specifically, the system control unit 25 controls the LED drive control unit 20 and the liquid-crystal-cell drive control unit 21 so that the first LED 1 is illuminated when the first electrode region 6a is in the OFF state and the second electrode region 6b is in the ON state and so that the second LED 2 is illuminated when the first electrode region 6a is in the ON state and the second electrode region 6b is in the OFF state. For illumination control of the first LED 1 and the second LED 2 during a transition period Tr when the state of the liquid crystal cell 6' changes, a control method according to one of the above-described embodiments may be employed.

As show in Fig. 31, during the illumination period of the first LED 1, first illumination light emitted from the first LED 1 is more highly collimated by a tapered rod 7 and is guided to the polarization beam splitter 72. At the polarization beam splitter 72, the first illumination light is split into P-polarized light and S-polarized light. The P-polarized light is outputted from the first output surface F1 and is incident on the first electrode region 6a. The S-polarized light is outputted from the second output surface F2. Then, the optical path of the S-polarized light is changed by 90 degrees at a triangular prism 9 so that the S-polarized light becomes parallel to the P-polarized light. Then, the S-polarized light is incident on the second electrode region 6b.

Since the first electrode region 6a is in the OFF state, the P-polarized light is converted into S-polarized light and is guided to the integrator rod 75. Since the second electrode region 6b is in the ON state, the S-polarized light is outputted with its polarization state unchanged. The S-polarized light beams outputted from the first electrode region 6a and the second electrode region 6b are combined at the integrator rod 75 so as to make the light intensity uniform. Then, the combined light is transmitted through the polarizing plate 71 in the S-polarization direction so as to align the polarization direction of the light in the polarization direction. Then, the light is guided to a spatial light modulator (not shown) and so on disposed downstream of the integrator rod 75.

As show in Fig. 32, during the illumination period of the second LED 2, second illumination light emitted from the second LED 2 is more highly collimated by the tapered rod 7 and is guided to the polarization beam splitter 72. At the polarization beam splitter 72, the second illumination light is split into P-polarized light and S-polarized light. The S-polarized light is outputted from the first output surface F1 and is incident on the first electrode region 6a. The P-polarized light is outputted from the second output surface F2. Then, the optical path of the S-polarized light is changed by 90 degrees at a triangular prism 9 so that the P-polarized light becomes parallel to the S-polarized light. Then, the P-polarized light is incident on the second electrode region 6b.

Since the first electrode region 6a is in the ON state, the S-polarized light is outputted with its polarization state unchanged. Since the second electrode region 6b is in the OFF state, the P-polarized light is converted into S-polarized light and is outputted. The S-polarized light beams outputted from the first electrode region 6a and the second electrode region 6b are combined at the integrator rod 75 so as to make the light intensity uniform. Then, the combined light is transmitted through the polarizing plate 71 in the S-polarization direction so as to align the polarization direction of the light in the polarization direction. Then, the light is guided to a spatial light modulator (not shown) and so on disposed downstream of the integrator rod 75.

As described above, in the illumination apparatus according to this embodiment, a two-electrode liquid crystal cell 6' is used and polarization rotation control is carried out independently. Therefore, a half-wave plate 73 (refer to Fig. 26) for converting the polarization direction of one of the light beams split off at the polarization beam splitter 72 is not required. In this way, a step caused by the thickness of the half-wave plate is removed, and, thus, the bonding surfaces of the tapered rod 7, the polarization beam splitter 72, the triangular prism 9, the liquid crystal cell 6', and the integrator rod 75 can be bonded together to form a single unit. As a result, reflection loss at the bonding surfaces, an increase in the cost of coating, and an increase in the complexity of mounts and supports can be suppressed compared with the case where the bonding surfaces are not bonded.

Since the integrator rod 75 is provided downstream of the liquid crystal cell 6', even if there is a difference in the intensity of light outputted from the first electrode region 6a and the second electrode region 6b of the liquid crystal cell 6' or even if there is a difference in light intensity at the electrode boundary surface, such difference in light intensity can be canceled out, and stable illumination light having a uniform intensity can be outputted.

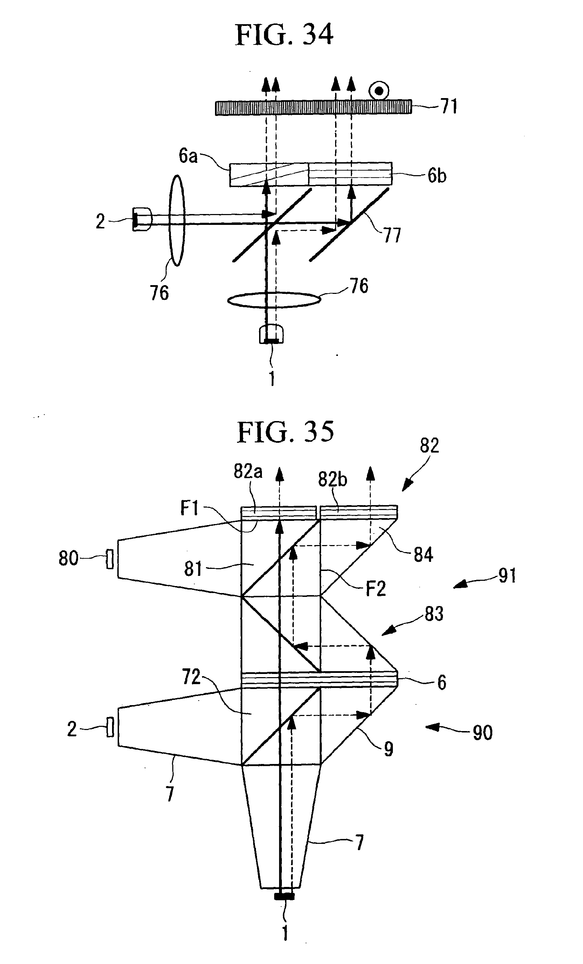

As shown in Fig. 34, in the illumination apparatus according to this embodiment, a focusing lens 76 may be used instead of a tapered rod 7 so as to make the illumination light more collimated. Furthermore, instead of using the polarization beam splitter 72 having a prism-block shape, such as that shown in Fig. 26, a polarization beam splitter having a so-called wire grid, i.e., a wavelength order bumpy pattern formed on the surface, may be used. Moreover, instead of the triangular prism 9, optical paths may be deflected by using a mirror 77.

By employing this structure, the distance traveled by the illumination light in a glass medium, such as the tapered rod, can be reduced, and the loss of light guided through the glass medium can thus be reduced.

### Seventh Embodiment

Next, an illumination apparatus according to a seventh embodiment of the present invention will be described.

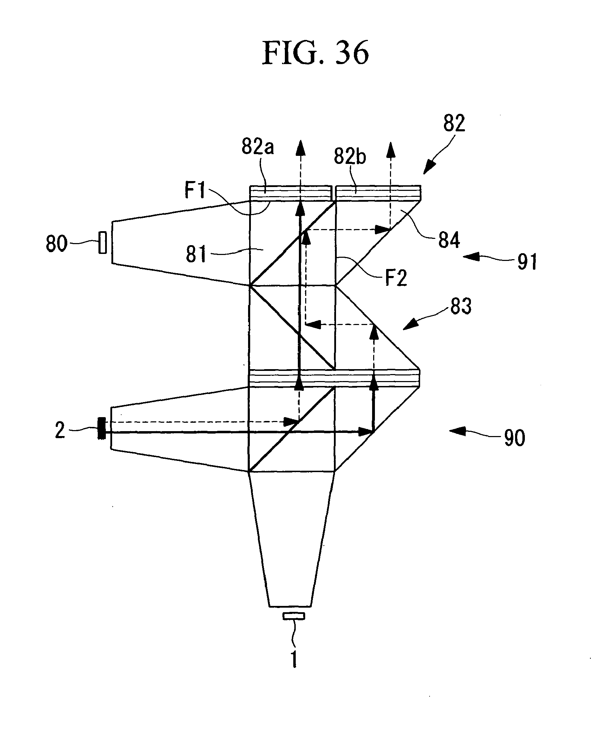

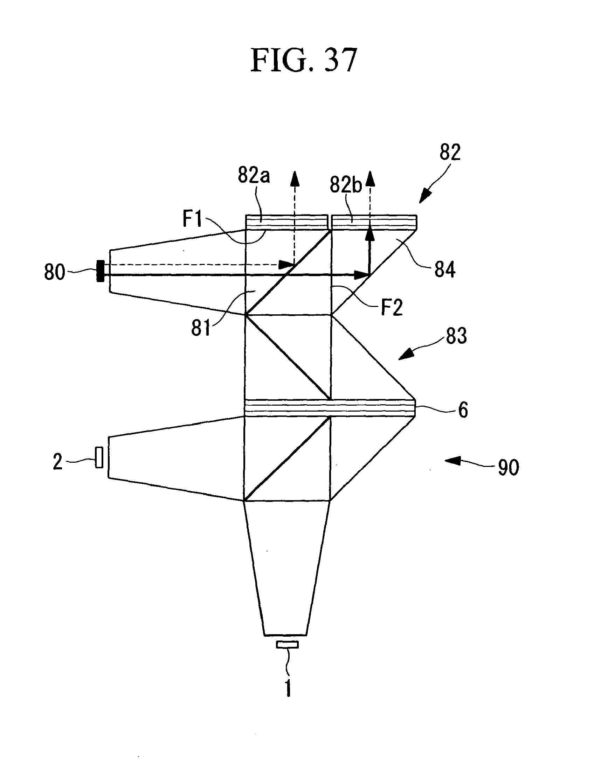

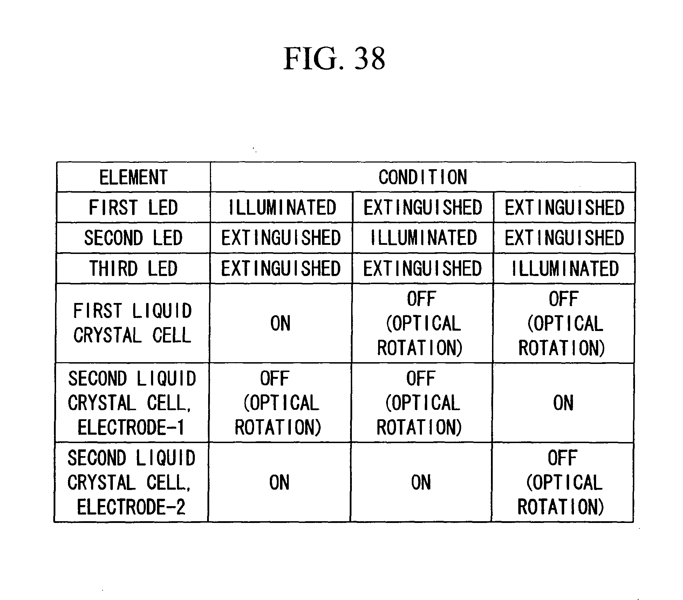

Figs. 35 to 37 illustrate the overall configuration of the illumination apparatus according to the seventh embodiment of the present invention; Fig. 35 illustrates the polarization states when a first LED is illuminated; Fig. 36 illustrates the polarization states when a second LED is illuminated; and Fig. 37 illustrates the polarization states when a third LED is illuminated. Fig. 38 illustrates the driving timings of the LEDs and a liquid crystal cell of the illumination apparatus according to this embodiment.

As shown in Fig. 35, the illumination apparatus according to this embodiment includes a first optical unit 90 that selectively outputs illumination light from the first LED 1 or the second LED 2, and a second optical unit 91 that adjusts the polarization directions of illumination light emitted from the first optical unit 90 and illumination light emitted from the third LED 80 and that outputs illumination light beams having the same polarization direction.

In this embodiment, the first optical unit 90 has essentially the same general structure as the illumination apparatus according the above-described fifth embodiment, except for some modifications. More specifically, in the first optical unit 90, the half-wave plate 73 shown in Fig. 26 is omitted so that illumination light from the triangular prism 9 is directly incident on the liquid crystal cell 6, and the polarizing plate 71 provided on the emission side of the liquid crystal cell 6 is also omitted.

The second optical unit 91 includes a second polarization beam splitter 81 that receives illumination light from the first optical unit 90 and third illumination light from the third LED 80 through different incident surfaces, splits the received illumination light into P-polarized light and S-polarized light, and outputs the P-polarized light and the S-polarized light from different output surfaces; and a two-electrode second liquid crystal cell 82 that receives light outputted from the second polarization beam splitter 81. The second optical unit 91 includes a first light-guiding member 83 that guides the illumination light outputted from the first optical unit 90 to the second polarization beam splitter 81 and a second light-guiding member 84 that guides one of the illumination light beams split off at the second polarization beam splitter 81 to the second liquid crystal cell 82.

A first electrode region 82a of the second liquid crystal cell 82 is disposed at a position where the illumination light outputted from a first output surface F1 of the second polarization beam splitter 81 is incident, and a second electrode region 82b is disposed at a position the illumination light outputted from a second output surface F2 of the second polarization beam splitter 81 is incident.

In the illumination apparatus having the above-described structure, the first liquid crystal cell 6, the second liquid crystal cell 82, the first LED 1, the second LED 2, and the third LED 80 are controlled in synchronization by a control device (not shown). The control device includes an LED drive control unit 20 that drives the first LED 1, the second LED 2, and the third LED 80, a liquid-crystal-cell drive control unit 21 that drives the first liquid crystal cell 6 and the second liquid crystal cell 82, and a system control unit that controls, in synchronization and on the basis of a detection result of a light-intensity sensor, the liquid-crystal-cell drive control unit 21 and the LED drive control unit 20 such that the intensity of the illumination light outputted from the second liquid crystal cell 82 becomes substantially constant.

More specifically, as shown in Fig. 38, the system control unit controls the LED drive control unit 20 and the liquid-crystal drive control unit 21 such that the first LED 1 is illuminated when the first liquid crystal cell 6 is in the ON state, the first electrode region 82a of the second liquid crystal cell 82 is in the OFF state, and the second electrode region 82b is in the ON state; the second LED 2 is illuminated when the first liquid crystal cell 6 is in the OFF state, the first electrode region 82a of the second liquid crystal cell 82 is in the OFF state, and the second electrode region 82b is in the ON state; and the third LED 80 is illuminated when the first liquid crystal cell 6 is in the OFF state, the first electrode region 82a of the second liquid crystal cell 82 is in the ON state, and the second electrode region 82b is in the OFF state.

As shown in Fig. 35, during the illumination period of the first LED 1, first illumination light emitted from the first LED 1 is outputted from the first optical unit 90 and is guided to the second polarization beam splitter 81 of the second optical unit 91 by the first light-guiding member 83.

In the second polarization beam splitter 81, the first illumination light is split into P-polarized light and s-polarized light. The P-polarized light is outputted from the first output surface F1 and is incident on the first electrode region 82a of the second liquid crystal cell 82. The S-polarized light is outputted from the second output surface F2. The optical path of the S-polarized light is changed by 90 degrees by the second light-guiding member 84 so that the S-polarized light becomes parallel to the P-polarized light. Then, the S-polarized light is incident on the second electrode region 82b of the second liquid crystal cell 82.

Since the first electrode region 82a is in the OFF state, the P-polarized light is converted into S-polarized light and is outputted. Since the second electrode region 82b is in the ON state, the S-polarized light is outputted without its polarization direction being changed. In this way, the first illumination light that is uniformly converted into S-polarized light is outputted from the second liquid crystal cell 82. As described in the sixth embodiment, an integrator rod and a polarizing plate having an S-polarization direction may be provided on the output surface side of the second liquid crystal cell 82. In this way, the light intensity can be made uniform.

As shown in Fig. 36, during the illumination period of the second LED 2, the second illumination light emitted from the second LED 2 is outputted from the first optical unit 90 and is guided to the second polarization beam splitter 81 of the second optical unit 91 by the first light-guiding member 83.

In the second polarization beam splitter 81, the second illumination light is split into P-polarized light and S-polarized light. The P-polarized light is outputted from the first output surface F1 and is incident on the first electrode region 82a of the second liquid crystal cell 82. The S-polarized light is outputted from the second output surface F2. The optical path of the S-polarized light is changed by 90 degrees by the second light-guiding member 84 so that the S-polarized light becomes parallel to the P-polarized light. Then, the S-polarized light is incident on the second electrode region 82b of the second liquid crystal cell 82.

Since the first electrode region 82a is in the OFF state, the P-polarized light is converted into S-polarized light and is outputted. Since the second electrode region 82b is in the ON state, the S-polarized light is outputted without its polarization direction being changed. In this way, the second illumination light that is uniformly converted into S-polarized light is outputted from the second liquid crystal cell 82.

As shown in Fig. 37, during the illumination period of the third LED 80, third illumination light emitted from the third LED 80 is guided to the second polarization beam splitter 81.

In the second polarization beam splitter 81, the third illumination light is split into P-polarized light and S-polarized light. The S-polarized light is outputted from the first output surface F1 and is incident on the first electrode region 82a of the second liquid crystal cell 82. The P-polarized light is outputted from the second output surface F2. The optical path of the P-polarized light is changed by 90 degrees by the second light-guiding member 84 so that the P-polarized light becomes parallel to the S-polarized light. Then, the P-polarized light is incident on the second electrode region 82b of the second liquid crystal cell 82.

Since the first electrode region 82a is in the ON state, the S-polarized light is outputted without its polarization direction being changed. Since the second electrode region 82b is in the OFF state, the P-polarized light is converted into S-polarized light and is outputted. In this way, the third illumination light that is uniformly converted into S-polarized light is outputted from the second liquid crystal cell 82.

As described above, in the illumination apparatus according to the seventh embodiment, the system control unit intermittently drives the first LED 1, the second LED 2, and the third LED 80 so as to alternately illuminate, in order, the first LED 1, the second LED 2, and the third LED 80. In this way, since an electrical current greater than a rated current can be applied to the first LED 1, the second LED 2, and the third LED 80, the brightness of the illumination light can be increased. Moreover, since the first LED 1, the second LED 2, the third LED 80, and the second liquid crystal cell 82 are driven in synchronization, bright illumination light having a desired polarization direction can be outputted.

According to this embodiment, the first optical unit 90 is not limited to the structure shown as an example in Fig. 35, so long as it is able to selectively output illumination light from the first LED 1 and the second LED 2 to the second optical unit 91. For example, the first optical unit 90 that includes the liquid crystal cell 6 may be provided without the liquid crystal cell 6.

According to this embodiment, the first LED 1 is illuminated when the first liquid crystal cell 6 is in the ON state and the second LED 2 is illuminated when the second liquid crystal cell 82 is in the OFF state. Instead, however, the first LED 1 may be illuminated when the first liquid crystal cell 6 is in the OFF state, and the second LED 2 may be illuminated when the first liquid crystal cell 6 is in the ON state. Since the third illumination light emitted from the third LED 80 is not transmitted through the first liquid crystal cell 6, the first liquid crystal cell 6 may be in either the OFF or ON state during the illumination period of the third LED 80.

### Third Application Example

Next, a transmissive three-panel LCD image projector employing the above-described illumination apparatus according to the sixth embodiment will be described.

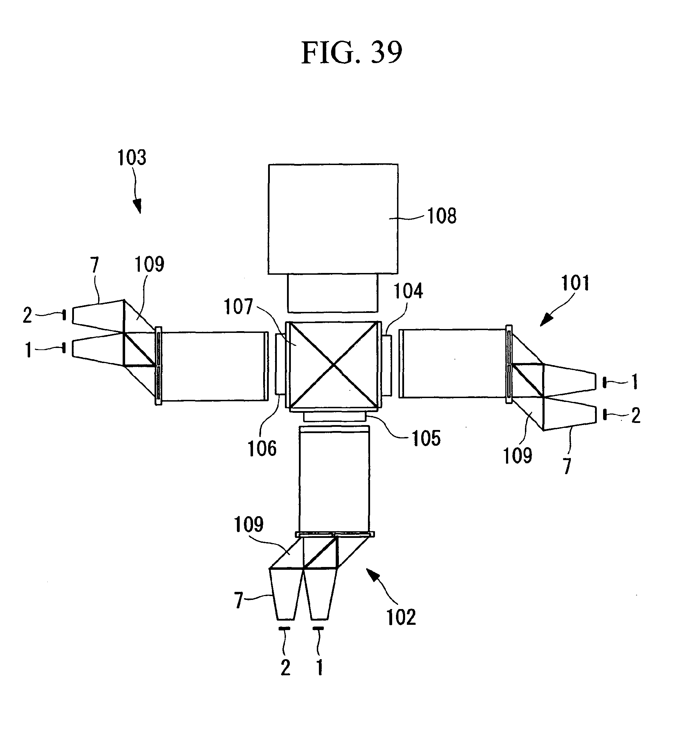

Fig. 39 illustrates, in outline, the overall configuration of the image projector according to this application example.

As shown in Fig. 39, the image projector according to this embodiment includes a first illumination apparatus 101 that outputs red illumination light, a second illumination apparatus 102 that outputs green illumination light, a third illumination apparatus 103 that outputs blue illumination light, a red LCD panel 104 for the red illumination light, a green LCD panel 105 for the green illumination light, a blue LCD panel 106 for the blue illumination light, a dichroic cross prism 107 that combines the illumination light beams transmitted through the LCD panels 104 to 106 and outputs the combined illumination light, and a projection lens 108 that expands the illumination light beam combined by the dichroic cross prism 107 and projects the expanded illumination light beam on a screen (not shown).

The illumination apparatus according to the sixth embodiment, shown in Figs. 31 and 32, includes the first LED 1 and the second LED 2 that are disposed at positions where their optical axes orthogonally intersect with each other. However, in this application example, the positions of the first LED 1 and the second LED 2 are changed. More specifically, the first LED 1 and the second LED 2 are arranged side by side. Therefore, a triangular prism 109 that deflects the optical path by 90 degrees is provided on the output surface of the tapered rod 7 of the second LED 2.

Red LEDs are used as the first LED 1 and the second LED 2 of the first illumination apparatus 101; green LEDs are used as the first LED 1 and the second LED 2 of the second illumination apparatus 102; and blue LEDs are used as the first LED 1 and the second LED 2 of the third illumination apparatus 103.

In an image projector having this structure, illumination light beams of each color, uniformly converted into S-polarized light beams, are outputted from the illumination apparatuses 101, 102, and 103, respectively, and are incident on corresponding transmissive LCDs. The illumination light beams of each color are modulated at each pixel on the transmissive LCDs on the basis of image data and are combined by the dichroic cross prism 107. Then, the combined illumination light is guided to the projection lens 108 and projected as an enlarged image on a screen (not shown).

In this way, by applying the above-described illumination apparatus according to the sixth embodiment, a bright image having sufficient light intensity is projected.

In this application example, the illumination apparatus according to the sixth embodiment is employed. Instead, however, the illumination apparatus according to the fifth or seventh embodiment may be employed.

### Fourth Application Example

Next, a single-panel field-sequential image projector using a reflective liquid crystal panel (liquid crystal on silicon (LCOS)) including the above-described illumination apparatus according the fifth embodiment will be described.

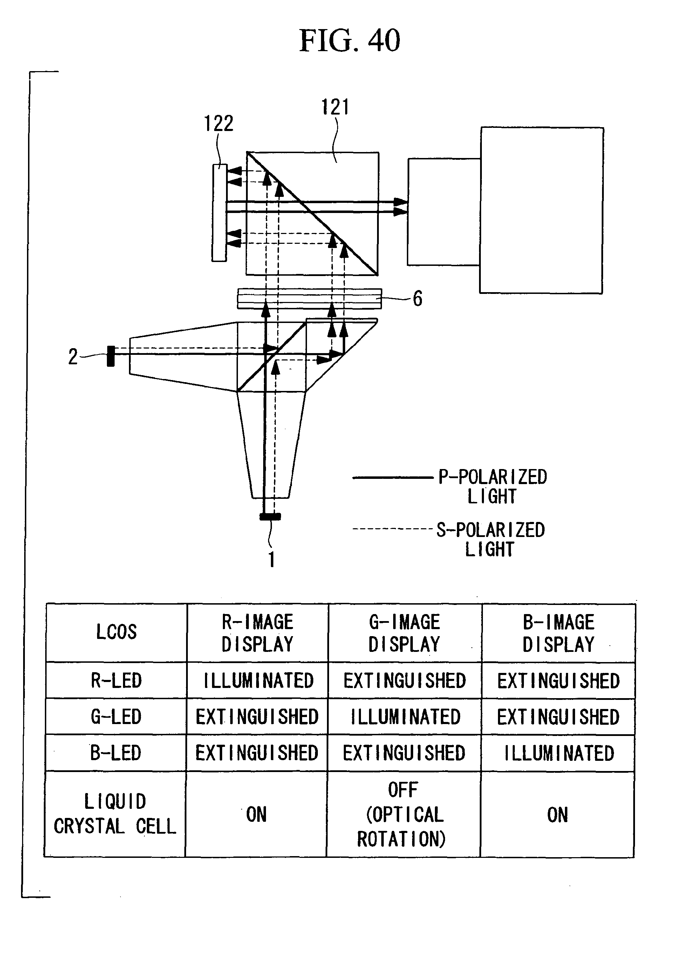

Fig. 40 illustrates, in outline, the overall configuration of the image projector according to this application example.

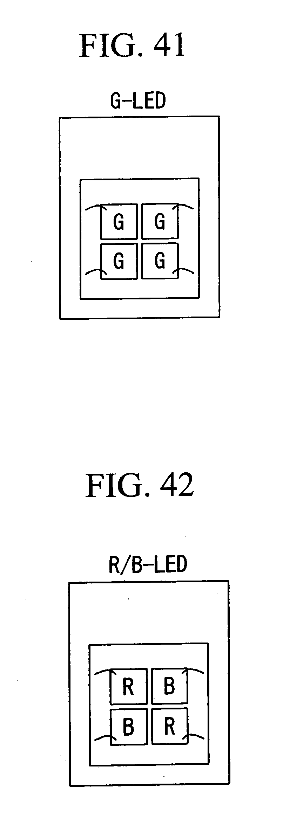

In the image projector according to this application example, as the first LED 1, an LED array including four green LED elements two-dimensionally arranged, such as that illustrated in Fig. 41, is used. As the second LED 2, an LED array including both red LED elements and blue LED elements, such as that illustrated in Fig. 42, is used.

The liquid crystal cell 6, the first LED 1, and the second LED 2 of the above-described illumination apparatus are controlled in synchronization by the control device (refer to Fig. 26). In addition, the control device illuminates the LED elements for each color of the first LED 1 and the second LED 2 in accordance with the image data to be projected.

More specifically, to project a red image, the control device of the illumination apparatus illuminates the red LED elements of the second LED 2 and switches the liquid crystal cell 6 to the ON state. In this way, red illumination light converted into S-polarized light is outputted from the illumination apparatus. The red illumination light outputted from the illumination apparatus is reflected at a polarization beam splitter 121 disposed forward in the optical path and is guided to a light modulator 122 disposed forward in the reflection optical path. Here, since a reflective liquid crystal panel (liquid crystal on silicon (LCOS)) 122 is used as the light modulator, the illumination light is modulated upon reflection at the reflective liquid crystal panel 122 and is returned to the polarization beam splitter 121. The modulated illumination light is transmitted through the polarization beam splitter 121, guided to the projection lens, expanded, and projected on a predetermined display area.

To project a green image, the control device of the illumination apparatus illuminates the first LED 1 and switches the liquid crystal cell 6 to the OFF state. To project a blue image, the illumination apparatus illuminates the blue LED elements of the second LED 2 and switches the liquid crystal cell 6 to the ON state. In this way, different colored illumination light beams are outputted from the illumination apparatus and incident on a predetermined display area, in the same manner as for the above-described red illumination light.

In this way, a color projection image can be obtained.

In the illumination apparatus according to this application example, a broadband polarization beam splitter should be used to combine the two light beams that are emitted from the first LED 1 and the second LED 2 and that have different wavelengths. Moreover, a reflective liquid crystal panel 122 having a fast response speed supports multiple colors (a plurality of different wavelengths) with a single panel by using a time-division field sequential method.

In this application example, the illumination apparatus according to the fifth embodiment is employed. Instead, however, the illumination apparatus according to the sixth or seventh embodiment may be employed.

## Claims

1. An illumination apparatus comprising:
at least two light source units capable of being driven in a flashing manner to output illumination light beams;
a polarization converter unit configured to make the polarization directions of the illumination light beams emitted from the at least two light source units uniform;
a liquid crystal cell configured to receive the illumination light beams outputted from the polarization converter unit; and
a control unit configured to control, in synchronization, the liquid crystal cell and the light source units so as to intermittently drive the light source units and substantially continuously output illumination light beams from the liquid crystal cell.

2. The illumination apparatus according to Claim 1, further comprising:
a detection unit configured to detect the intensity of the illumination light transmitted through the liquid crystal cell,
wherein the control unit controls the liquid crystal cell and the light source units on the basis of the result detected by the detection unit.

3. The illumination apparatus according to Claim 1, wherein the control unit intermittently drives the light source units and switches the light source unit to be illuminated during a transition period when the polarization direction of the illumination light transmitted through the liquid crystal cell is changed from a first direction to a second direction that is orthogonal to the first direction.

4. The illumination apparatus according to Claim 3, wherein the control unit switches the light source unit to be illuminated near an intermediate point of the transition period.

5. The illumination apparatus according to Claim 1, wherein the control unit intermittently drives the light source units and controls the light source units such that illumination light beams having polarization directions orthogonal to each other are incident on the liquid crystal cell during a transition period when the polarization direction of the illumination light transmitted through the liquid crystal cell is changed from a first direction to a second direction that is orthogonal to the first direction.

6. The illumination apparatus according to Claim 1, wherein the control unit intermittently drives the light source units and controls the light source units such that the light source units are all turned off during a transition period when the polarization direction of the illumination light transmitted through the liquid crystal cell is changed from a first direction to a second direction that is orthogonal to the first direction.

7. The illumination apparatus according to Claim 1, wherein the polarization converter unit includes
a polarization beam splitter provided for each of the light source units and configured to split illumination light outputted from the corresponding light source unit into P-polarized light and S-polarized light, and
a polarizing unit configured to match the polarization direction of one illumination light beam split at the polarization beam splitter with the polarization direction of the other split illumination light beam.

8. An illumination apparatus comprising:
a first light source unit;
a second light source unit;
a first polarization converter unit configured to match the polarization direction of illumination light emitted from first light source unit to a first polarization direction and output the illumination light;
a second polarization converter unit configured to match the polarization direction of illumination light emitted from second light source unit to a second polarization direction orthogonal to the first polarization direction and output the illumination light;
a light-combining unit configured to combine light emitted from the first light source unit and light emitted from the second light source unit;
a liquid crystal cell configured to receive illumination light combined at the light-combining unit and convert the polarization direction of the illumination light; and
a control unit configured to intermittently drive the first light source unit and the second light source unit and control, in synchronization, the liquid crystal cell, the first light source unit, and the second light source unit so as to substantially continuously output illumination light from the liquid crystal cell.

9. The illumination apparatus according to Claim 8, wherein, when a light-combining unit comprises a polarization beam splitter, the control unit controls an illumination unit such that the intensity of P-polarized light incident on the polarization beam splitter is greater than the intensity of S-polarized light on the basis of incident-angle dependency of transmissivity of P-polarized light and transmissivity of S-polarized light of the polarization beam splitter.

10. The illumination apparatus according to Claim 1, wherein, when the illumination apparatus comprises two of the light source units, the polarization converter unit includes
a polarization beam splitter configured to split first illumination light emitted from one light source unit into P-polarized light and S-polarized light, split second illumination light emitted from the other light source unit into P-polarized light and S-polarized light, output the P-polarized light of the first illumination light and the S-polarized light of the second illumination light from a first output surface, and output the S-polarized light of the first illumination light and the P-polarized light of the second illumination light from a second output surface, and
a polarization unit configured to convert the polarization direction of illumination light outputted from the first output surface or the second output surface of the polarization beam splitter.

11. An illumination apparatus comprising:
at least two light source units capable of being driven in a flashing manner to output illumination light beams;
a light splitting unit configured to split illumination light emitted from the light source units into P-polarized light and S-polarized light and to output the P-polarized light and S-polarized light;
a polarization converter unit configured to match the polarization direction of one illumination light beam outputted from the light splitting unit with the polarization direction of the other illumination light beam;
a liquid crystal cell configured to receive the illumination light beams outputted from the polarization converter unit; and
a control unit configured to control, in synchronization, the polarization converter unit and the light source units so as to intermittently drive the light source units and substantially continuously output illumination light from the liquid crystal cell.

12. The illumination apparatus according to Claim 11, wherein the polarization converter unit comprises a liquid crystal cell including two liquid crystal cell regions that are controllable independently.

13. An image projector configured to project an image on the basis of input image information, the image projector comprising:
the illumination apparatus according to Claim 1, 9, or 11 ;
a light modulating unit configured to modulate illumination light outputted from the illumination apparatus on the basis of input image information; and
a projection optical unit configured to project illumination light modulated at the light modulating unit.
